(19) **Europäisches Patentamt**
**European Patent Office**
**Office européen des brevets**

(11) **EP 4 428 964 A1**

(12) # EUROPEAN PATENT APPLICATION
published in accordance with Art. 153(4) EPC

(43) Date of publication:
**11.09.2024 Bulletin 2024/37**

(21) Application number: **22890163.3**

(22) Date of filing: **15.09.2022**

(51) International Patent Classification (IPC):
$H01M\ 8/1051^{(2016.01)}$  $H01M\ 8/1053^{(2016.01)}$
$H01M\ 8/1058^{(2016.01)}$  $H01M\ 8/1067^{(2016.01)}$
$H01M\ 8/1004^{(2016.01)}$  $H01M\ 8/10^{(2016.01)}$

(52) Cooperative Patent Classification (CPC):
**H01M 8/10; H01M 8/1004; H01M 8/1051;**
**H01M 8/1053; H01M 8/1058; H01M 8/1067;**
**Y02E 60/50**

(86) International application number:
**PCT/KR2022/013804**

(87) International publication number:
**WO 2023/080427 (11.05.2023 Gazette 2023/19)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **02.11.2021 KR 20210149037**
**20.05.2022 KR 20220061939**

(71) Applicant: **Sang-a Frontec Co., Ltd**
**Incheon 21629 (KR)**

(72) Inventors:
- **JEONG, Ji Hong**
  **Incheon 22002 (KR)**
- **JUNG, Sung Gi**
  **Incheon 21974 (KR)**
- **LEE, Min Jin**
  **Incheon 22229 (KR)**

(74) Representative: **Piticco, Lorena**
**Isler & Pedrazzini AG**
**Giesshübelstrasse 45**
**Postfach 1772**
**8027 Zürich (CH)**

(54) **PEMFC ELECTROLYTE MEMBRANE DURABILITY ENHANCER, PEMFC COMPOSITE ELECTROLYTE MEMBRANE, COMPRISING SAME, AND PEMFC MEMBRANE ELECTRODE ASSEMBLY**

(57) The present invention relates to a PEMFC durability enhancer, a PEMFC composite electrolyte membrane manufactured using same and a membrane-electrode assembly, and to: a PEMFC composite electrolyte membrane having a PEMFC electrolyte membrane durability that decreases through chemical degradation if an electrolyte membrane is thinned, but a durability enhancer of the present invention inhibits chemical degradation of the electrolyte membrane so that electrolyte membrane durability deterioration caused by chemical degradation is prevented, and having high dimensional stability, mechanical properties and electrical stability; and a membrane electrode assembly.

**FIG. 1a**

EP 4 428 964 A1

**FIG. 1b**

**Description**

[Technical Field]

The present invention relates to a high durability enhancer which suppresses the chemical degradation of an electrolyte membrane of a PEMFC membrane-electrode assembly, a PEMFC composite electrolyte membrane and a PEMFC membrane-electrode assembly manufactured by applying the same.

[Background Art]

A fuel cell is a power generation system that directly converts chemical energy generated by an electrochemical reaction between a fuel (hydrogen or methanol) and an oxidizing agent (oxygen) into electrical energy, and it is being researched and developed as a next-generation energy source due to its eco-friendly features such as high energy efficiency and low pollutant emissions. Fuel cells can be used by selecting and using high-temperature and low-temperature fuel cells depending on the application field, and are generally classified according to the type of electrolyte. For high-temperature fuel cells, there are solid oxide fuel cells (SOFC), molten carbonate fuel cells (MCFC) and the like, and for low-temperature fuel cells, alkaline fuel cells (AFC), polymer electrolyte membrane fuel cells (PEMFC) and the like are representatively being developed.

The double-polymer electrolyte fuel cell is divided into a proton exchange membrane fuel cell (PEMFC) that uses hydrogen gas as fuel and a direct methanol fuel cell (DMFC) that uses liquid methanol directly supplied to the anode as fuel. Polymer electrolyte fuel cells are in the limelight as portable, vehicular and home power devices due to their advantages such as a low operating temperature of less than 100°C, the exclusion of leakage problems due to the usage of solid electrolytes, fast start-up and response characteristics, excellent durability and the like. In particular, as a high-output fuel cell with a high current density compared to other types of fuel cells, research into portable fuel cells continues to be conducted because it can be miniaturized.

The unit cell structure of such a fuel cell has a structure in which an anode (fuel electrode) and a cathode (oxygen electrode) are coated on both sides of an electrolyte membrane as the center, which is composed of a polymer material, and this is called a membrane-electrode assembly (MEA). The membrane-electrode assembly (MEA) is a part in which an electrochemical reaction between hydrogen and oxygen occurs, and it is composed of a reduction electrode, an oxidation electrode and an electrolyte membrane, that is, an ion conductive electrolyte membrane (e.g., a hydrogen ion conductive electrolyte membrane).

At the oxidation electrode, hydrogen or methanol, which is a fuel, is supplied, and an oxidation reaction of hydrogen occurs to generate hydrogen ions and electrons. At the reduction electrode, hydrogen ions passing through the polymer electrolyte membrane combine with oxygen to produce water through a reduction reaction of oxygen.

This membrane-electrode assembly has a form in which the electrode catalyst layers of the oxidation electrode and reduction electrode are coated on both sides of the ion conductive electrolyte membrane, and the material constituting the electrode catalyst layer has a form in which catalyst materials such as Pt (platinum) or Pt-Ru (platinum-ruthenium) are supported on a carbon carrier. The membrane-electrode assembly (MEA), which can be seen as a key part of the electrochemical reaction of fuel cells, uses an ion conductive electrolyte membrane and a platinum catalyst, which have a high-cost ratio, and since it is a part that is directly related to power production efficiency, it is considered as the most important part in improving the performance and price competitiveness of fuel cells.

The conventional method for manufacturing a commonly used MEA uses a method of preparing a paste by mixing a catalyst material, a hydrogen ion conductive binder, that is, a fluorine-based Nafion Ionomer, and a water and/or an alcohol solvent, and after this is coated on carbon cloth or carbon paper, which simultaneously serves as both an electrode support for the catalyst layer and a gas diffusion layer, it is dried and thermally bonded to the hydrogen ion conductive electrolyte membrane.

In the catalyst layer, the oxidation-reduction reaction of hydrogen and oxygen by a catalyst; the movement of electrons by closely packed carbon particles; securing passages for supplying hydrogen, oxygen and moisture and discharging excess gas after reaction; the movement of oxidized hydrogen ions must be performed simultaneously. Furthermore, in order to improve performance, the activation polarization must be reduced by increasing the area of the triple phase boundary where the supplied fuel, catalyst and ion conductive polymer electrolyte membrane meet, and ohmic polarization at the interface must be reduced by uniformly bonding the interface between the catalyst layer and the electrolyte membrane and the interface between the catalyst layer and the gas diffusion layer. Therefore, in order to improve the performance of the fuel cell by maximally reducing the interfacial resistance between the catalyst layer and the electrolyte membrane, bonding strength between the catalyst layer and the electrolyte membrane is required during preparation of the MEA, and interfacial bonding between the catalyst layer and the electrolyte membrane must be continuously maintained during the operation of the fuel cell.

Accordingly, in recent years, technologies for uniformly bonding the interface between the catalyst layer and the electrolyte membrane and the interface between the catalyst layer and the gas diffusion layer have been actively developed, but there is a disadvantage in that the uniformity of the interface is still limited.

Additionally, in the case of an MEA having the above-described structure, since an electrolyte membrane having a thick thickness is conventionally used, the transfer of hydrogen ions may be delayed, resulting in performance deterioration.

In addition, as the movement of hydrogen ions and the usage time increase during the operation of fuel cells, the interface bonding the interface between the catalyst layer and the electrolyte membrane and the interface between the catalyst layer and the gas diffusion layer are weakened such that they are separated from each other. Accordingly, when applied to a fuel cell, performance degradation of the fuel cell may be caused.

In order to shorten the movement time of hydrogen ions and the like, the thickness of the electrolyte membrane must be reduced. To this end, there is a method of thinning the thickness of the porous support constituting the electrolyte membrane, and in order to thin the thickness of the support, not only did the physical properties such as strength of the support significantly decrease during high stretching, but also the defect rate during the preparation of the support was high, and thus, there has been a problem in that the economic and commercial feasibility are low, and particularly, there has been a problem of poor durability of the electrolyte membrane.

In addition, hydrogen and oxygen in the air, which are the reaction gases of the fuel cell, crossover through the electrolyte membrane to promote the production of hydrogen peroxide, and this hydrogen peroxide generates oxygen-containing radicals such as hydroxyl radical ($\cdot$H) and hydroperoxyl radical ($\cdot$OOH). These radicals attack the ionomer electrolyte membrane to cause chemical degradation of the membrane and eventually cause a problem of lowering the performance of the fuel cell (voltage drop).

In order to prevent this, various antioxidants are used, and for example, a primary antioxidant with a radical scavenger function and a secondary antioxidant with a hydrogen peroxide decomposer function are mixed and applied to the electrolyte membrane, but it is known that the usage of such a primary antioxidant increases the antioxidant property, but causes a decrease in the long-term stability of the electrolyte membrane (S. Schlick et al., J. Phys. Chem. C, 120, 6885 - 6890(2016); S. Deshpande et al., Appl. Phys.Lett., 8, 133113 (2005)).

Therefore, in order to increase the commercialization of fuel cells, a new approach for improving the durability of electrolyte membranes is required.

[Disclosure]

[Technical Problem]

The present invention has been devised in consideration of the above points, and is directed to providing a PEMFC composite electrolyte membrane by developing a high durability enhancer for a PEMFC electrolyte membrane that can function not only as a primary antioxidant but also as a secondary antioxidant by complexing with a specific material, applying the same to a thinned electrolyte membrane, and complexing the electrolyte membrane therewith into a multilayer structure, a PEMFC membrane-electrode complex using the same and a durability enhancer applied thereto.

[Technical Solution]

In order to solve the above-described problems, the present invention relates to a PEMFC electrolyte membrane durability enhancer, including platinum (Pt) and a carrier supporting the platinum, wherein the carrier includes at least one selected from $CeO_2$, GDC (Gd-doped Ceria), $IrO_2$, $SnO_2$ and $Ti_4O_7$.

In a preferred exemplary embodiment of the present invention, the platinum may be a nano-sized platinum powder, and the platinum powder may be integrated by combining on a surface of the carrier,

In a preferred exemplary embodiment of the present invention, the GDC may be a compound represented by Chemical Formula 1 below, in which gadolinium (Gd) is doped into a ceria lattice:

[Chemical Formula 1]         $Gd_xCe_{1-x}O_{2-y}$

wherein in Chemical Formula 1, x is a fixed number that satisfies $0<x\leq0.3$, and y is an oxygen vacancy value that makes a compound electrically neutral, and is a fixed number that satisfies $0<y\leq0.25$.

In a preferred exemplary embodiment of the present invention, the PEMFC electrolyte membrane durability enhancer may include 0.01 to 6.00 wt.% of platinum and the remaining amount of a carrier.

In a preferred exemplary embodiment of the present invention, the particle size ($D_{50}$) of the platinum powder may be 0.1 to 50 nm, and the particle size ($D_{50}$) of the carrier may be 10 to 2,000 nm.

In a preferred exemplary embodiment of the present invention, the PEMFC electrolyte membrane durability enhancer may have a BET specific surface area of 10 to 500 $m^2/g$.

In a preferred exemplary embodiment of the present invention, when the carrier is $CeO_2$, the PEMFC electrolyte membrane durability enhancer may include 0.01 to 6.00 wt.% of platinum particles based on the total weight of the PEMFC electrolyte membrane durability enhancer.

In a preferred exemplary embodiment of the present invention, when the carrier is $IrO_2$, the PEMFC electrolyte membrane durability enhancer may include 0.01 to 4.50 wt.% of platinum particles based on the total weight of the PEMFC electrolyte membrane durability enhancer.

In a preferred exemplary embodiment of the present invention, when the carrier is $SnO_2$, the PEMFC electrolyte membrane durability enhancer may include 0.01 to 3.00 wt.% of platinum particles based on the total weight of the PEMFC electrolyte membrane durability enhancer.

In a preferred exemplary embodiment of the present invention, when the carrier is $Ti_4O_7$, the PEMFC electrolyte membrane durability enhancer may include 0.01 to 5.50 wt.% of platinum particles based on the total weight of the PEMFC electrolyte membrane durability enhancer.

In a preferred exemplary embodiment of the present invention, the PEMFC electrolyte membrane durability enhancer of the present invention may include two or more types of the composite, and may further include a cerium-based composite which includes the platinum particles and $CeO_2$ supporting the platinum particles as a carrier; and a non-cerium-based composite which includes the platinum particles as a carrier, wherein the carrier of the non-cerium-based composite may include at least one selected from $IrO_2$, $SnO_2$ and $Ti_4O_7$.

In a preferred exemplary embodiment of the present invention, the cerium-based composite and the non-cerium-based composite may be included at a weight ratio of 1 : 0.1 to 50.

In a preferred exemplary embodiment of the present invention, the PEMFC electrolyte membrane durability enhancer of the present invention may further include the cerium-based composite; and a gadolinium-based composite which includes platinum (Pt) particles and a GDC (Gd-doped Ceria) carrier represented by Chemical Formula 1 above for supporting the platinum particles.

In a preferred exemplary embodiment of the present invention, the cerium-based composite and the gadolinium-based composite may be included at a weight ratio of 1 : 0.05 to 10.

Another object of the present invention is to provide a PEMFC composite electrolyte membrane, including the above-described PEMFC electrolyte membrane durability enhancer.

In a preferred exemplary embodiment of the present invention, the PEMFC electrolyte membrane may have a single-layer structure or a multi-layer structure.

In a preferred exemplary embodiment of the present invention, the PEMFC electrolyte membrane may be a composite electrolyte membrane.

In a preferred exemplary embodiment of the present invention, the composite electrolyte membrane may have a structure in which a first electrolyte layer, a first support layer and a second electrolyte layer are sequentially stacked.

In a preferred exemplary embodiment of the present invention, the composite electrolyte membrane may have a multilayer structure in which a first electrolyte layer, a first support layer, a second electrolyte layer, a second support layer and a third electrolyte layer are sequentially stacked.

In a preferred embodiment of the present invention, it may further include a third support layer which is formed on one surface of the third electrolyte layer; and a fourth electrolyte layer which is formed on one surface of the third support layer.

In a preferred exemplary embodiment of the present invention, any one or more layers selected from the first electrolyte layer, the second electrolyte layer, the third electrolyte layer and/or the fourth electrolyte layer may include the above-described PEMFC electrolyte membrane durability enhancer.

In a preferred exemplary embodiment of the present invention, the PEMFC composite electrolyte membrane includes a first electrolyte layer and a second electrolyte layer, the first electrolyte layer and the second electrolyte layer include the PEMFC electrolyte membrane durability enhancer, and the content of the PEMFC electrolyte membrane durability enhancer in the first electrolyte layer and the content of the PEMFC electrolyte membrane durability enhancer in the second electrolyte layer have a weight ratio of 1 : 0.05 to 1.00.

In a preferred exemplary embodiment of the present invention, at least one layer selected from the first electrolyte layer and the second electrolyte layer may further include a cerium (Ce)-based radical scavenger.

In a preferred exemplary embodiment of the present invention, each of the first electrolyte layer, the second electrolyte layer, the third electrolyte layer and/or the fourth electrolyte layer may include at least one selected from a perfluorinated sulfonated ionomer and a hydrocarbon-based ionomer,

In a preferred exemplary embodiment of the present invention, each of the first electrolyte layer, the second electrolyte layer, the third electrolyte layer and/or the fourth electrolyte layer may include a radical scavenger which includes at least one selected $CeZnO$, $CeO_2$, $Ru$, $Ag$, $RuO_2$, $WO_3$, $Fe_3O_4$, $CePO_4$, $CrPO_4$, $AlPO_4$, $FePO_4$, $CeF_3$, $FeF_3$, $Ce_2(CO_3)_3 \cdot 8H_2O$, $Ce(CHCOO)_3 \cdot H_2O$, $CeCl_3 \cdot 6H_2O$, $Ce(NO_3)_6 \cdot 6H_2O$, $Ce(NH_4)_2(NO_3)_6$, $Ce(NH_4)_4(SO_4)_4 \cdot 4H_2O$ and $Ce(CH_3COCHCOCH_3)_3 \cdot 3H_2O$, in addition to the PEMFC electrolyte membrane durability enhancer.

In a preferred exemplary embodiment of the present invention, each of the first electrolyte layer, the second electrolyte layer, the third electrolyte layer and/or the fourth electrolyte layer may further include at least one selected from hollow silica and a moisture absorbent.

In a preferred exemplary embodiment of the present invention, the first electrolyte layer, the second electrolyte layer, the third electrolyte layer and/or the fourth electrolyte layer of the PEMFC composite electrolyte member may each independently include the PEMFC electrolyte membrane durability enhancer, and the content of the PEMFC electrolyte membrane durability enhancer in the electrolyte layer may be constituted to have a gradient in which the content decreases based on the cathode electrode.

In a preferred exemplary embodiment of the present invention, in the PEMFC composite electrolyte membrane, a support layer may be formed between the first electrolyte layer and the second electrolyte layer, the second electrolyte layer and the third electrolyte layer, and the third electrolyte layer and the fourth electrolyte layer; or in the composite electrolyte membrane, only one support layer may be formed between the first electrolyte layer and the second electrolyte layer, the second electrolyte layer and the third electrolyte layer, or the third electrolyte layer and the fourth electrolyte layer.

In a preferred exemplary embodiment of the present invention, the PEMFC composite electrolyte membrane may have an average thickness of 5 to 30 $\mu$m.

In a preferred exemplary embodiment of the present invention, each of the first electrolyte layer, the second electrolyte layer, the third electrolyte layer and/or the fourth electrolyte layer may have a thickness of 1 to 20 $\mu$m.

In a preferred exemplary embodiment of the present invention, each of the first support layer, the second support layer and/or the third support layer may have a thickness of 0.1 to 10 $\mu$m.

In a preferred exemplary embodiment of the present invention, each of the first support layer, the second support layer and/or the third support layer may include a PTFE porous support having an average pore size of 0.080 to 0.200 $\mu$m and an average porosity of 60 to 90%.

In a preferred exemplary embodiment of the present invention, when the composite electrolyte membrane has a structure in which the first electrolyte layer, the first support layer and the second electrolyte layer are stacked, it may satisfy Condition (1) below:

$$\text{Condition (1) } B_1 \leq A_1, B_1 \leq A_2$$

wherein in Condition (1) above, $A_1$ represents the thickness of the first electrolyte layer, $A_2$ represents the thickness of the second electrolyte layer, and $B_1$ represents the thickness of the first support layer.

In a preferred exemplary embodiment of the present invention, when applied to a PEMFC membrane-electrode assembly, the PEMFC composite electrolyte membrane may be an electrolyte membrane in which a first electrolyte layer, a first support layer and a second electrolyte layer are sequentially stacked in the anode direction to the cathode direction, and the PEMFC composite electrolyte membrane may satisfy Condition (2) below:

$$\text{Condition (2) } A_1 \leq A_2$$

wherein in Condition (2) above, $A_1$ represents the content of the PEMFC electrolyte membrane durability enhancer in the first electrolyte layer, and $A_2$ represents the content of the PEMFC electrolyte membrane durability enhancer in the second electrolyte layer.

In a preferred exemplary embodiment of the present invention, the PEMFC composite electrolyte membrane may satisfy all of Conditions (3) and (4) below:

$$(3) \ B_1 \leq A_1, B_1 \leq A_2, B_1 \leq A_3$$

$$(4) \ B_2 \leq A_1, B_2 \leq A_2, B_2 \leq A_3$$

wherein in Conditions (3) and (4) above, $A_1$ represents the thickness of the first electrolyte layer, $A_2$ represents the thickness of the second electrolyte layer, $A_3$ represents the thickness of the third electrolyte layer, $B_1$ represents the thickness of the first support layer, and $B_2$ represents the thickness of the second support layer.

In a preferred exemplary embodiment of the present invention, when applied to a PEMFC membrane-electrode assembly, the PEMFC composite electrolyte membrane may be a composite electrolyte membrane in which a first electrolyte layer, a first support layer, a second electrolyte layer, a second support layer and a third electrolyte layer are sequentially stacked in the anode direction to the cathode direction, and the PEMFC composite electrolyte membrane may satisfy Condition (5) or (6) below:

$$\text{Condition (5) } A_1 \leq A_2 \leq A_3$$

$$\text{Condition (6) } A_2 \leq A_1, A_2 \leq A_3, A_1 \leq A_3$$

wherein in Conditions (5) and (6) above, $A_1$ represents the content of the PEMFC electrolyte membrane durability enhancer in the first electrolyte layer, $A_2$ represents the content of the PEMFC electrolyte membrane durability enhancer in the second electrolyte layer, and $A_3$ represents the content of the PEMFC electrolyte membrane durability enhancer in the third electrolyte layer.

In a preferred exemplary embodiment of the present invention, the PEMFC composite electrolyte membrane of the present invention may satisfy Condition (3) below:

$$\text{Condition (3) } 1.5 \leq \frac{(A_1 + A_2 + A_3)}{(B_1 + B_2)} \leq 12$$

wherein in Condition (3) above, $A_1$ represents the thickness of the first electrolyte layer, $A_2$ represents the thickness of the second electrolyte layer, $A_3$ represents the thickness of the third electrolyte layer, $B_1$ represents the thickness of the first support layer, and $B_2$ represents the thickness of the second support layer.

In a preferred exemplary embodiment of the present invention, the PEMFC composite electrolyte membrane of the present invention may satisfy Condition (4) below:

$$\text{Condition (4) } 0.2 \leq \frac{(A_1 + A_3)}{A_2} \leq 10$$

wherein in Condition (4) above, $A_1$ represents the thickness of the first electrolyte layer, $A_2$ represents the thickness of the second electrolyte layer, and $A_3$ represents the thickness of the third electrolyte layer.

Still another object of the present invention is to provide a PEMFC membrane-electrode assembly, including an anode (oxidation electrode); the PEMFC composite electrolyte membrane; and a cathode (reduction electrode).

[Advantageous Effects]

Since the high durability enhancer of the present invention not only acts as an antioxidant, which is a radical scavenger effect, but also acts as an antioxidant that reduces gas permeability, the durability enhancement effect of the electrolyte membrane is excellent without adding a separate radical scavenger, and it is possible to omit the process of adding a radical scavenger when preparing an electrolyte membrane. The PEMFC composite electrolyte membrane prepared by introducing the high durability enhancer of the present invention has a thin thickness, excellent durability and dimensional stability, as well as high tensile strength and excellent performance, and thus, it is possible to prepare a PEMFC membrane-electrode assembly with excellent long-term stability and high efficiency, as well as a fuel cell incorporating the same.

[Description of Drawings]

FIGS. 1a and 1b are schematic diagrams of a PEMFC composite electrolyte membrane according to a preferred embodiment of the present invention.
FIG. 2 is a schematic diagram of a PEMFC composite electrolyte membrane according to another preferred embodiment of the present invention.
FIG. 3 is a schematic diagram of a PEMFC composite electrolyte membrane according to still another preferred embodiment of the present invention.
FIG. 4 is a schematic diagram of a PEMFC composite electrolyte membrane according to still another preferred embodiment of the present invention.
FIG. 5 is a schematic diagram of a PEMFC membrane-electrode assembly according to a preferred embodiment of the present invention.

FIG. 6 is a graph of the OCV measurement results of Example 1, Examples 3 and 4 and Comparative Example 1 conducted in Experimental Example 1.

[Modes of the Invention]

Hereinafter, with reference to the accompanying drawings, the exemplary embodiments of the present invention will be described in detail so that those skilled in the art can easily practice the present invention. The present invention may be embodied in many different forms and is not limited to the exemplary embodiments set forth herein. In order to clearly describe the present invention in the drawings, parts that are irrelevant to the description are omitted, and the same reference numerals are assigned to the same or similar components throughout the specification.

The PEMFC electrolyte membrane durability enhancer of the present invention serves to increase the durability of an electrolyte membrane by preventing chemical degradation of the electrolyte membrane due to radicals generated during PEMFC operation. The durability enhancer of the present invention is in the form of a powder of a composite type, and includes platinum (Pt) and a carrier supporting the platinum. The composite-type durability enhancer of the present invention simultaneously performs the radical scavenger function, which is the primary antioxidant function, and the hydrogen peroxide decomposition function, which is the secondary antioxidant function, and also performs the function of a gas decomposition and/or gas barrier function and the function of an electron conductor.

The high durability enhancer includes 0.01 to 6.00 wt.% of platinum particles and the remaining amount of the carrier, and preferably, it may include 0.01 to 5.50 wt.% of platinum particles and the remaining amount of the carrier, and more preferably, it may include 0.10 to 5.00 wt.% of platinum particles and the remaining amount of the carrier. In this case, if the content of platinum particles in the total weight of the high durability enhancer is less than 0.01 wt.%, the radical scavenging function is insufficient, and thus, the chemical degradation prevention effect may be reduced. If the content of platinum particles is more than 6.00 wt.%, the chemical degradation prevention efficiency may be reduced due to side reactions other than the decomposition effect of hydrogen peroxide, and thus, it is recommended to use within the above range.

The high durability enhancer of the present invention is integrated with nano-sized platinum particles that are bonded to a surface of the carrier. For example, platinum particles may be bonded by depositing the same on a surface of the carrier.

The particle size ($D_{50}$) of the platinum particles may be 0.1 to 50 nm, preferably, 0.1 to 30 nm, and more preferably, 3.0 to 20.0 nm. In this case, if the particle size ($D_{50}$) of the platinum particle is 0.1 nm or less, it may be difficult to handle and difficult to prepare a high durability enhancer, and if the particle size ($D_{50}$) of the platinum particle is more than 50 nm, there may be problems with a decrease in reaction area and the agglomeration of platinum particles.

The carrier may include at least one selected from $CeO_2$, GDC (Gd-doped Ceria), $IrO_2$, $SnO_2$ and $Ti_4O_7$.

$CeO_2$, GDC, $IrO_2$, $SnO_2$ and $Ti_4O_7$ are catalytic materials with a good oxygen generation reaction, have excellent stability and high electrical conductivity in the case of carriers used in a high-voltage acidic environment, and are stable materials in a high-voltage acidic environment, and when a carrier is used, it may play a role in increasing the dispersibility of Pt. In addition, they are materials specialized for preventing the corrosion of carbon by decomposing water when reverse voltage occurs due to the lack of fuel during fuel cell operation, and when water in the electrode blocks the pores or turns a fuel cell on or off, a special situation occurs where fuel supply is insufficient, and in this case, $CeO_2$, GDC, $IrO_2$, $SnO_2$ and $Ti_4O_7$ may play a role in enhancing the durability and stability of the fuel cell.

In addition, the GDC (Gd-doped Ceria) is an oxide doped with gadolinium (Gd) in a ceria lattice, and it may be a compound represented by Chemical Formula 1 below.

[Chemical Formula 1] $\qquad Gd_xCe_{1-x}O_{2-y}$

In Chemical Formula 1, x is a fixed number that satisfies $0<x\leq0.3$, preferably $0<x\leq0.25$, and more preferably, $0<x\leq0.20$, and y is an oxygen vacancy value that makes the compound electrically neutral, which is a fixed number that satisfies $0<y\leq0.25$.

The durability enhancer of the present invention is integrated with nano-sized platinum powder bonded to ta surface of the carrier. For example, the platinum powder may be bonded by depositing the same on a surface of the carrier.

In addition, the optimum content of platinum particles in the high durability enhancer may be slightly different depending on the type of carrier.

When the carrier is $CeO_2$, the content of platinum particles may be 0.01 to 6.00 wt.%, preferably, 0.1 to 5.5 wt.%, and more preferably, 0.5 to 5.5 wt.%, based on the total weight of the high durability enhancer.

In addition, when the carrier is $IrO_2$, the content of platinum particles in the total weight of the high durability enhancer may be 0.01 to 4.50 wt.%, preferably, 0.1 to 3.5 wt.%, and more preferably, 0.5 to 3.0 wt.%.

In addition, when the carrier is $SnO_2$, the content of platinum particles in the total weight of the high durability enhancer may be 0.01 to 3.00 wt.%, preferably, 0.1 to 2.5 wt.%, and more preferably, 0.3 to 2.0 wt.%.

In addition, when the carrier is $Ti_4O_7$, the content of platinum particles in the total weight of the high durability enhancer may be 0.01 to 5.50 wt.%, preferably, 0.1 to 4.5 wt.%, and more preferably, 0.5 to 3.5 wt.%.

In addition, the high durability enhancer of the present invention may use a single type of composite (platinum particles + carrier), or use two types of composites to achieve equal or better durability enhancement effects while using less or the same amount as a single-type composite.

For a specific example, the high durability enhancer of the present invention may include two or more of the above composites, and may include a cerium-based composite and a non-cerium-based composite, and preferably, it may include a cerium-based composite and a non-cerium-based composite at a weight ratio of 1 : 0.1 to 50.

For another specific example, the high durability enhancer may include two or more of the above composites, and may include a cerium-based composite and a gadolinium-based carrier composite, preferably, it may include a cerium-based composite and a gadolinium-based composite at a weight ratio of 1 : 0.05 to 10.

In this case, the cerium-based composite refers to a composite including the platinum particles and $CeO_2$ supporting the platinum particles as a carrier, and the non-cerium-based composite refers to a composite including the platinum particles and a carrier including at least one selected from $IrO_2$, $SnO_2$ and $Ti_4O_7$. In addition, as a gadolinium-based carrier composite, the GDC composite refers to a composite including platinum (Pt) particles and a GDC (Gd-doped Ceria) carrier represented by Chemical Formula 1 supporting the platinum particles.

In addition, the carrier may have a particle size ($D_{50}$) of 10 to 2,000 nm, preferably, 10 to 1,000 nm, more preferably, 50 to 800 nm, and even more preferably, 50 to 650 nm. In this case, if the particle size ($D_{50}$) of the carrier is 10 nm or less, it may be difficult to attach the platinum particle size, and if the particle size ($D_{50}$) of the carrier is more than 2,000 nm, there may be a problem in that the reaction area decreases.

The high durability enhancer of the present invention may have a BET surface area of 10 to 500 $m^2/g$, preferably, 80 to 400 $m^2/g$, and more preferably, 90 to 250 $m^2/g$.

Hereinafter, the PEMFC electrolyte membrane using the durability enhancer of the present invention described above will be described.

The PEMFC electrolyte membrane of the present invention may have a single-layer structure or a multi-layer structure, and an example of the multi-layer structure may be a composite electrolyte membrane as follows. In this case, the electrolyte layer of each layer of the composite electrolyte membrane may be formed with the electrolyte membrane-forming solution, or may be formed with an electrolyte membrane-forming solution having a different constitution.

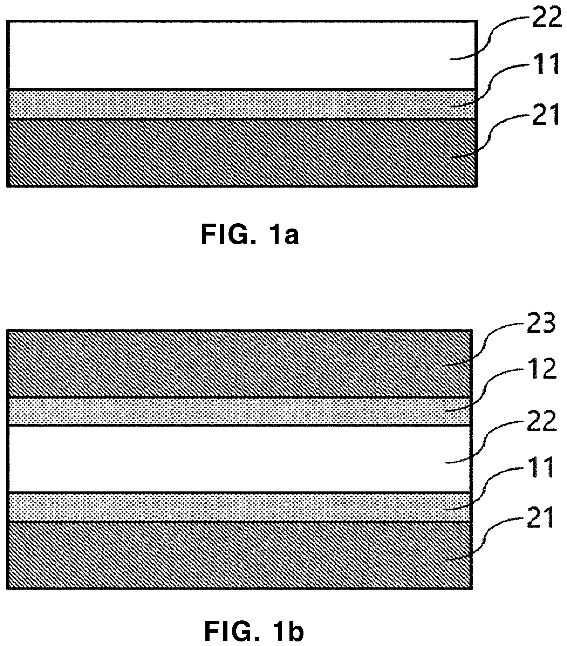

Referring to FIG. 1a, the composite electrolyte membrane for a PEMFC (Polymer Electrolyte Membrane Fuel Cell) of the present invention has a structure in which a first electrolyte layer 21, a first support layer 11 and a second electrolyte layer 22 are sequentially stacked, and at least one layer of the first electrolyte layer and/or the second electrolyte layer may include the durability enhancer described above.

In addition, at least one layer selected from the first electrolyte layer and the second electrolyte layer may further include a cerium (Ce)-based radical scavenger.

The PEMFC composite electrolyte membrane is an electrolyte membrane in which the first electrolyte layer, the first support layer and the second electrolyte layer are sequentially stacked from the anode direction to the cathode direction when applied to a PEMFC membrane-electrode assembly, and it may include a durability enhancer in the electrolyte layer in order to satisfy Condition (2) below, and since the role and effect of the durability enhancer are greater at the cathode than at the anode, satisfying Condition (2) below is advantageous in terms of performance and durability of the PEMFC membrane-electrode assembly.

$$\text{Condition (2) } A_1 \leq A_2$$

In Condition (2), $A_1$ represents the content of the durability enhancer in the first electrolyte layer, and $A_2$ represents the content of the durability enhancer in the second electrolyte layer.

In addition, referring to FIG. 1b, the composite electrolyte membrane for a PEMFC (Polymer Electrolyte Membrane Fuel Cell) of the present invention may have a structure in which a first electrolyte layer 21, a first support layer 11, a second electrolyte layer 22, a second support layer 12 and a third electrolyte layer 23 are sequentially stacked.

Specifically, the PEMFC composite electrolyte membrane of the present invention may include a first electrolyte layer 21, a first support layer 11 formed on one surface of the first electrolyte layer 21, a second electrolyte layer 22 formed on one surface of the first support layer 11, a second support layer 12 formed on one surface of the second electrolyte layer 22 and a third electrolyte layer 23 formed on one surface of the second support layer 12. In addition, at least one of the first to third electrolyte layers may include the above-described durability enhancer.

When applied to a PEMFC membrane-electrode assembly, the PEMFC composite electrolyte membrane may be a composite electrolyte membrane in which a first electrolyte layer, a first support layer, a second electrolyte layer, a second support layer and a third electrolyte layer are sequentially stacked from the anode direction to the cathode direction, and it may satisfy Condition (5) or Condition (6) below, and satisfying Condition (5) or (6) is advantageous in terms of optimizing the durability enhancer effect of the PEMFC membrane-electrode assembly.

$$\text{Condition (5) } A_1 \leq A_2 \leq A_3$$

$$\text{Condition (6) } A_2 \leq A_1, A_2 \leq A_3, A_1 \leq A_3$$

In Conditions (5) and (6) above, $A_1$ represents the content of the durability enhancer in the first electrolyte layer, $A_2$ represents the content of the durability enhancer in the second electrolyte layer, and $A_3$ represents the content of the durability enhancer in the third electrolyte layer.

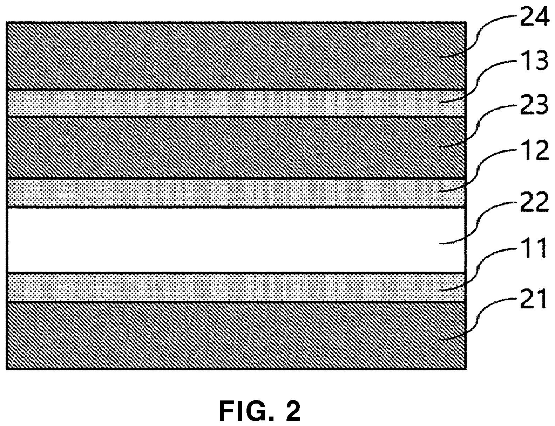

In addition, referring to FIG. 2, the PEMFC composite electrolyte membrane of the present invention may have a structure in which a first electrolyte layer 21, a first support layer 11, a second electrolyte layer 22, a second support layer 12, a third electrolyte layer 23, a third support layer 13 and a fourth electrolyte layer 24 are sequentially stacked.

Specifically, the PEMFC composite electrolyte membrane of the present invention may include a first electrolyte layer 21, a first support layer 11 formed on one surface of the first electrolyte layer 21, a second electrolyte layer 22 formed on one surface of the first support layer 11, a second support layer 12 formed on one surface of the second electrolyte layer 22, a third electrolyte layer 23 formed on one surface of the second support layer 12, a third support layer 13 formed on one surface of the third electrolyte layer 23 and a fourth electrolyte layer 24 formed on one surface of the third support layer 13.

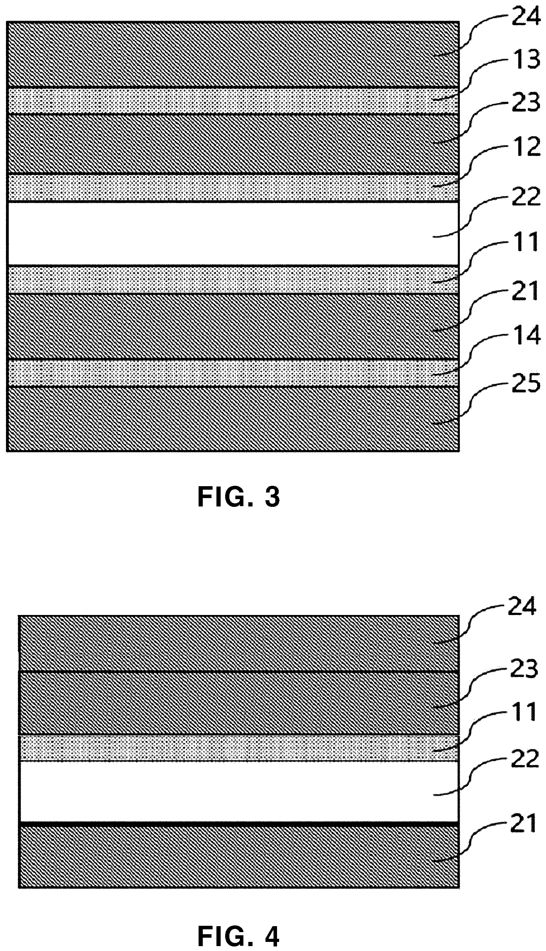

In addition, referring to FIG. 3, the PEMFC composite electrolyte membrane of the present invention may have a structure in which a fifth electrolyte layer 25, a fourth support layer 14, a first electrolyte layer 21, a first support layer 11, a second electrolyte layer 22, a second support layer 12, a third electrolyte layer 23, a third support layer 13 and a fourth electrolyte layer 24 are sequentially stacked.

Specifically, the PEMFC composite electrolyte membrane of the present invention may include a fifth electrolyte layer 25, a fourth support layer 14 formed on one surface of the fifth electrolyte layer 25, a first electrolyte layer 21 formed on one surface of the fourth support layer 14, a first support layer 11 formed on one surface of the first electrolyte layer 21, a second electrolyte layer 22 formed on one surface of the first support layer 11, a second support layer 12 formed on one surface of the second electrolyte layer 22, a third electrolyte layer 23 formed on one surface of the second support layer 12, a third support layer 13 formed on one surface of the third electrolyte layer 23, a third support layer 13 formed on one surface of the third support layer 13 and a fourth electrolyte layer 24 formed on one surface of the third support layer 13. In this case, the fourth support layer 13 may be the same as the first support layer 11, the second support layer 12 and/or the third support layer 13 described above, and the fifth electrolyte layer 25 may be the same as the first electrolyte layer 21, the second electrolyte layer 22, the third electrolyte layer 23 and/or the fourth electrolyte layer 24 described above.

In addition, the PEMFC composite electrolyte membrane may be formed with only one support layer between the first electrolyte layer and the second electrolyte layer, the second electrolyte layer and the third electrolyte layer, or the third electrolyte layer and the fourth electrolyte layer, and as a preferred embodiment, as illustrated in the schematic diagram in FIG. 4, it may include a first electrolyte layer 21, a second electrolyte layer 22 formed on one surface of the first electrolyte layer, a support layer 11 formed on one surface of the second electrolyte layer 22, a third electrolyte layer 23 formed on one surface of the support layer 11 and a fourth electrolyte layer 24 formed on one surface of the third electrolyte layer 23

Each of the first support layer, the second support layer and the third support layer of the present invention may use a general porous support used in the art, and preferably, it may include a PTFE (polytetrafluoroethylene) porous support having specific physical properties prepared by the following preparation method.

The PTFE porous support of the present invention may be prepared by performing a process including step 1-1 of preparing a paste by mixing and stirring a PTFE powder and a lubricant; step 1-2 of maturing the paste; step 1-3 of preparing an unfired tape by extruding and rolling the matured paste; step 1-4 of drying the unfired tape and removing a liquid lubricant; step 1-5 of uniaxially stretching the unfired tape from which the lubricant has been removed; step 1-6 of biaxially stretching the uniaxially stretched unfired tape; and step 1-7 of firing.

In step 1-1, the paste may include a lubricant at 15 to 35 parts by weight, preferably, 15 to 30 parts by weight, and more preferably, 15 to 25 parts by weight, based on 100 parts by weight of the PTFE powder. When the lubricant is included at less than 15 parts by weight based on 100 parts by weight of the PTFE powder, the porosity may be lowered when forming the porous PTFE support by the biaxial stretching process described below, and when the lubricant is included at more than 35 parts by weight, the size of the pores may increase when forming the PTFE porous support, which may weaken the strength of the support.

The average particle diameter of the PTFE powder may be 300 $\mu$m to 800 $\mu$m, and preferably, 450 $\mu$m to 700

μm, but the present invention is not limited thereto. The lubricant is a liquid lubricant, and various alcohols, ketones, esters and the like may be used, in addition to hydrocarbon oils such as liquid paraffin, naphtha, white oil, toluene, xylene and the like, and preferably, at least one selected from liquid paraffin, naphtha and white oil may be used.

Next, the maturing of step 1-2 is a preforming process, and the paste may be matured at a temperature of 30 to 70°C for 12 to 24 hours, and preferably, it may be matured at a temperature of 35 to 60°C for 16 to 20 hours. When the maturing temperature is less than 35°C or the maturing time is less than 12 hours, the lubricant coating on the surface of the PTFE powder becomes non-uniform, and thus, the stretching uniformity of the porous PTFE support may be limited during biaxial stretching described below.

In addition, when the maturing temperature is more than 70°C or the maturing time is more than 24 hours, there may be a problem in that the pore size of the porous PTFE support after the biaxial stretching process becomes too small due to evaporation of the lubricant.

Next, in the extrusion of step 1-3, the matured paste is compressed in a compressor to produce a PTFE block, and then, it may be performed by pressurizing and extruding the PTFE block at a pressure of 0.069 to 0.200 Ton/cm$^2$, and preferably, at a pressure of 0.090 to 0.175 Ton/cm$^2$.

In this case, if the extrusion pressure is less than 0.069 Ton/cm$^2$, the pore size of the porous support may increase, and the strength of the porous support may be weakened, and if the pressure is more than 0.200 Ton/cm$^2$, there may be a problem in that the pore size of the porous support after the biaxial stretching process becomes small.

In addition, the rolling of step 1-3 may be performed as a calendaring process at 50 to 100°C with a hydraulic pressure of 5 to 10 MPa. In this case, if the hydraulic pressure is less than 5 MPa, the pore size of the porous support may increase, and the strength of the porous support may be weakened, and if the hydraulic pressure is more than 10 MPa, there may be a problem in that the pore size of the porous support becomes small.

Next, the drying of step 1-4 may be performed through a general drying method used in the art, and as a preferred example, it may be performed by transporting the unfired tape prepared by rolling on a conveyor belt at a temperature of 100°C to 200°C at a speed of 1 to 5M/min, and preferably, at a temperature of 140°C to 190°C at a speed of 2 to 4M/min. In this case, if the drying temperature is 100°C or less, or the drying rate is more than 5 M/min, bubbles may be generated during the stretching process due to non-evaporation of the lubricant, and if the drying temperature is 200°C or more, or the drying rate is less than 1 M/min, the stiffness of the dried tape may increase, and slip may occur during the stretching process.

Next, the uniaxial stretching of step 1-5 is a process of stretching the unfired tape from which the lubricant has been removed in the longitudinal direction, and uniaxial stretching is performed by using a speed difference between rollers when transporting through rollers. Additionally, in the uniaxial stretching, the unfired tape from which the lubricant has been removed is preferably stretched in the longitudinal direction by 3 to 10 times, preferably, 6 to 9.5 times, more preferably, 6.2 to 9.0 times, and even more preferably, 6.3 to 8.2 times. In this case, if the uniaxial stretching ratio is less than 3 times, sufficient mechanical properties may not be secured, and if the uniaxial stretching ratio is more than 10 times, the mechanical properties may rather decrease, and there may be a problem in that the pores of the support become too large.

In addition, uniaxial stretching may be preferably performed at a stretching temperature of 260 to 350°C and a stretching rate of 6 to 12 M (meter)/min, and preferably, at a stretching temperature of 270 to 330°C and a stretching rate of 8 to 11.5 M/min. If the stretching temperature is less than 260°C or the stretching rate is less than 6 M/min during uniaxial stretching, there may be a problem in that the heat applied to the drying sheet increases, and a firing section occurs, and additionally, during uniaxial stretching, if the stretching temperature is more than 350°C or the stretching rate is more than 12 M/min, slip may occur during the uniaxial stretching process, and there may be a problem of a decrease in thickness uniformity.

Next, in the biaxial stretching of step 1-6, stretching may be performed in the width direction (direction perpendicular to uniaxial stretching) of the uniaxially stretched unfired tape, and the width is widened in the transverse direction while the end is fixed. However, the present invention is not limited thereto, and stretching may be performed according to a stretching method commonly used in the art. In the present invention, the biaxial stretching may be performed by 15 to 50 times in the width direction, preferably, by 25 to 45 times, more preferably, by 28 to 45 times, and even more preferably, by 29 to 42 times. In this case, if the biaxial stretching ratio is 15 times or less, sufficient mechanical properties may not be secured, and even if it is more than 50 times, mechanical properties are not improved, and since there may be a problem in that the uniformity of physical properties in the longitudinal direction and/or width direction is deteriorated. it is preferable to perform stretching within the above range.

In addition, biaxial stretching is preferably performed at a stretching rate of 10 to 20 M/min at a stretching temperature of 150 to 260°C, and preferably, at a stretching rate of 11 to 18 M/min at a stretching temperature of 200 to 250°C, and if the biaxial stretching temperature is less than 150 °C or the stretching rate is less than 10 M/min, there may be a problem in that the stretching uniformity in the transverse direction is lowered, and if the biaxial stretching temperature is more than 260 °C or the stretching rate is more than 20 M/min, there may be a problem in that the physical properties are deteriorated due to the occurrence of an unfired section.

Lastly, the firing of step 1-7 may be performed at 350 to 450°C, preferably, at 380°C to 440°C, and more preferably, 400°C to 435°C, while moving the stretched porous support on a conveyor belt at a speed of 10 to 18 M/min, and preferably, 13 to 17 M/min, and through this, the stretching ratio may be fixed, and the strength improvement effect may be sought. During firing, if the firing temperature is less than 350°C, the strength of the porous support may be lowered, and if it is more than 450°C, there may be a problem in that the physical properties of the support are deteriorated due to a decrease in the number of fibrils due to over-firing.

In addition, the PTFE porous support prepared by performing the process of step 1-7 may have a stretch ratio (or aspect ratio) of 1:3.00 to 8.5, preferably, 1 : 4.0 to 7.0, more preferably, 1 : 4.00 to 5.50, and even more preferably, 1 : 4.20 to 5.00 in the uniaxial direction (longitudinal direction) and biaxial direction (width direction), and it is preferable that the uniaxial and biaxial direction stretching ratios (or aspect ratios) are within the above range in terms of high mechanical properties, securing an appropriate pore size of the support and securing appropriate current flow.

The prepared PTFE porous support of the present invention may have an average pore size of 0.080 $\mu$m to 0.200 $\mu$m, preferably, 0.090 $\mu$m to 0.180 $\mu$m, more preferably, 0.095 $\mu$m to 0.150 $\mu$m, and even more preferably, 0.100 to 0.140 $\mu$m. In addition, the porous PTFE support of the present invention may have an average porosity of 60% to 90%, and more preferably, 60% to 79.6%.

If the average pore size of the PTFE porous support of the present invention is less than 0.080 $\mu$m or the porosity is less than 60%, when impregnated with an electrolyte to prepare an electrolyte membrane by using the PTFE porous support, the degree of impregnation of the electrolyte in the PTFE porous support may be limited In addition, if the average pore size is more than 0.200 $\mu$m or the porosity is more than 90%, the structure of the porous PTFE support is deformed when impregnated with the electrolyte, and there may be a problem in that product lifespan deteriorates due to a decrease in dimensional stability.

Meanwhile, when measured according to ASTM D 882, the PTFE porous support of the present invention may satisfy Equation 1 below for uniaxial modulus and biaxial modulus values.

$$0 \leq |(\text{Uniaxial modulus-Biaxial modulus})/(\text{Uniaxial modulus}) \times 100\%| \leq 54\%, \text{ preferably, } 0 \leq |(\text{Uniaxia modulus-Biaxial modulus})/(\text{Uniaxial modulus}) \times 100\%| \leq 40\%, \text{ and more preferably } 1 \leq |(\text{Uniaxial modulus-Biaxial modulus})/(\text{Uniaxial modulus}) \times 100\%| \leq 26\% \qquad \text{[Equation 1]}$$

In addition, when measured according to ASTM D 882, the PTFE porous support of the present invention may have a uniaxial (longitudinal direction) modulus of 40 MPa or more, preferably, a uniaxial modulus of 50 MPa or more, more preferably, a uniaxial modulus of 48 to 75 Mpa, and even more preferably, 65 to 75 Mpa. In addition, the biaxial (width direction) modulus may be 40 MPa or more, and preferably, the biaxial direction (width direction) modulus may be 55 Mpa or more, more preferably, 46 to 75 Mpa, and even more preferably, 55 to 75 Mpa.

In addition, when measured according to ASTM D882, the PTFE porous support of the present invention may have a uniaxial (longitudinal direction) tensile strength of 40 MPa or more and a biaxial (width direction) tensile strength of 40 MPa or more, and preferably, the uniaxial tensile strength may be 50 MPa or more, and more preferably, the uniaxial tensile strength may be 54 to 65 Mpa. In addition, preferably, the biaxial tensile strength may be 52 Mpa or more, and more preferably, the biaxial tensile strength may be 52 to 70 Mpa.

Meanwhile, each of the first support layer, the second support layer and the third support layer of the present invention may have a thickness of 0.1 to 10 $\mu$m, preferably, a thickness of 1 to 7 $\mu$m, more preferably a thickness of 1 to 5 $\mu$m, even more preferably, a thickness of 1.5 to 4 $\mu$m, and still even more preferably, 1.5 to 2.5 $\mu$m. If the thickness is less than 0.1 $\mu$m, there may be a problem in that the tensile strength is reduced, and if the thickness is more than 10 $\mu$m, there may be a problem in that the thinning is disadvantageous.

In addition, the first electrolyte layer, the second electrolyte layer, the third electrolyte layer and/or the fourth electrolyte layer may each independently include the high durability enhancer, but the content of the high durability enhancer may vary for each electrolyte layer. For example, when the PEMFC composite electrolyte membrane is a composite electrolyte membrane in which in the direction of the anode electrode to the cathode electrode, a first electrolyte layer, a first support layer, a second electrolyte layer, a second support layer and a third electrolyte layer are sequentially stacked; or a composite electrolyte membrane in which in the direction of the anode electrode to the cathode electrode, a first electrolyte layer, a first support layer, a second electrolyte layer, a second support layer, a third electrolyte layer, a third support layer and a fourth electrolyte layer are sequentially stacked, the content of the high durability enhancer in the electrolyte layer may be adjusted such that the content of the high durability enhancer in the electrolyte layer decreases as the distance from the cathode electrode increases, and thus, there is a gradient in which the content of the high durability enhancer in the electrolyte layer decreases based on the cathode electrode.

For a preferred example, it is possible to prepare a composite electrolyte membrane by adjusting the content of the high durability enhancer such that the high durability enhancer content ratio of the fourth electrolyte layer, the third electrolyte layer, the second electrolyte layer and the first electrolyte layer is set to a weight ratio of 1 : 0.1 to 0.99 : 0 to 0.80 : 0 to 0.70.

Next, each of the first electrolyte layer 21, the second electrolyte layer 22, the third electrolyte layer 23 and the fourth electrolyte layer 24 of the present invention may include an ionomer including at least one selected from a perfluorine-based sulfonated ionomer (PFSA ionomer) and a hydrocarbon-based ionomer.

The perfluorine-based sulfonated ionomer of the present invention may include at least one selected from Nafion, Flemion, aquivion and Aciplex, and preferably, it may include aquivion.

The hydrocarbon-based ionomer may include at least one selected from polyarylene sulfone (PAES)-based, polyether-ether ketone (PEEK)-based and polyimide (PI)-based ionomers.

In addition, the ionomer not only constitutes each of the first electrolyte layer 21, the second electrolyte layer 22, the third electrolyte layer 23 and the fourth electrolyte layer 24, but also may be included in pores of the first support layer 11 and/or the second support layer 12.

Meanwhile, each of the first electrolyte layer 21, the second electrolyte layer 22, the third electrolyte layer 23 and the fourth electrolyte layer 24 of the present invention may include a durability enhancer, and the durability enhancer includes platinum (Pt) and a carrier supporting the platinum, and the description thereof is the same as previously described.

In addition, when preparing an electrolyte solution for forming an electrolyte layer (or electrolyte membrane), 0.01 to 20 wt.% of the durability enhancer and the remaining amount of the ionomer may be included based on the total weight of the electrolyte solution, and preferably, it may include 0.1 to 10 wt.% of the durability enhancer and the remaining amount of the ionomer, and more preferably, it may include 0.1 to 1.0 wt.% of the durability enhancer and the remaining amount of the ionomer. In this case, if the content of the durability enhancer is less than 0.01 wt.%, the usage amount thereof is too small to have a chemical degradation prevention effect of the electrolyte layer (or electrolyte membrane), and if the durability enhancer content is more than 20 wt.%, it may act as an impurity and cause a problem of lowering ionic conductivity, and thus, it is preferable to use the same within the above range.

In addition, each of the first electrolyte layer 21, the second electrolyte layer 22, the third electrolyte layer 23 and the fourth electrolyte layer 24 may further include a radical scavenger for PEMFC in addition to the ionomer and durability enhancer.

The radical scavenger for PEMFC of the present invention may be prepared by forming a CeZnO metal oxide having a ZnO crystal structure doped with cerium ions by mixing a Ce precursor aqueous solution with a $[Zn(OH)_4]^{2-}$-containing solution and performing a reduction reaction. Herein, the "ZnO crystal structure doped with Ce ions" means that a crystal structure in which some of Zn atoms are substituted with Ce atoms is newly formed in a ZnO crystal structure having a crystal structure of Wurtzite or the like.

When this is described more specifically, the radical scavenger for PEMFC may be prepared by performing a process including step 1 of preparing a Zn precursor solution by dissolving the Zn precursor in alcohol and then raising the temperature of the Zn precursor solution; step 2 of preparing a $[Zn(OH)_4]^{2-}$ containing solution; step 3 of mixing an aqueous Ce precursor solution with a $[Zn(OH)_4]^{2-}$ containing solution and performing a reduction reaction to form CeZnO metal oxide particles having a ZnO crystal structure doped with Ce ions; step 4 of recovering and washing the CeZnO metal oxide particles; and step 5 of drying the washed CeZnO metal oxide particles. For a more detailed explanation, Korean Registered Patent No. 10-1860870 by the same Applicant can be incorporated as a reference.

The radical scavenger for PEMFC of the present invention is a metal oxide particle having a crystal structure composed of cerium (Ce) atoms, zinc (Zn) atoms and oxygen (O) atoms, and as a preferred example, in the ZnO crystal structure having a crystal structure of Wurtzite or the like, it may have a crystal structure in which some of the Zn atoms are substituted by Ce atoms.

In addition, the radical scavenger for PEMFC of the present invention may include at least one selected from CeZnO, $CeO_2$, Ru, Ag, $RuO_2$, $WO_3$, $Fe_3O_4$, $CePO_4$, $CrPO_4$, $AlPO_4$, $FePO_4$, $CeF_3$, $FeF_3$, $Ce_2(CO_3)_3 \cdot 8H_2O$, $Ce(CH-COO)_3 \cdot H_2O$, $CeCl_3 \cdot 6H_2O$, $Ce(NO_3)_6 \cdot 6H_2O$, $Ce(NH_4)_2(NO_3)_6$, $Ce(NH_4)_4(SO_4)_4 \cdot 4H_2O$ and $Ce(CH_3COCHCOCH_3)_3 \cdot 3H_2O$.

In addition, the radical scavenger for PEMFC of the present invention may include 12 to 91 wt.% of Ce, 7 to 84.5 wt.% of Zn, and the remaining amount of O (oxygen atoms), and preferably, it may include 13.40 to 89.20 wt.% of Ce, 7.55 to 88.20 wt.% of Zn and the remaining amount of O. In addition, it may further include other unavoidable impurities.

In addition, the radical scavenger of the present invention may have a particle size ($D_{50}$) of 500 nm or less, preferably, 300 nm or less, and more preferably, 200 to 300 nm, when the particle size ($D_{50}$) is analyzed with a DLS (Dynamic Light Scattering) type nano particle size analyzer.

Meanwhile, each of the first electrolyte layer, the second electrolyte layer, the third electrolyte layer and the fourth electrolyte layer of the present invention may include 0.001 to 10 parts by weight of the radical scavenger for PEMFC, preferably, 0.01 to 10 parts by weight, and more preferably, 0.1 to 8 parts by weight, based on 100 parts by weight of the perfluorine-based sulfonated ionomer, and if it is included at less than 0.001 parts by weight, there may be a problem with poor durability, and if it is more than 10 parts by weight, durability is improved, but there may be a problem in that the performance of the composite electrolyte membrane of the present invention is deteriorated due to low ion conductivity.

In addition, each of the first electrolyte layer 21, the second electrolyte layer 22, the third electrolyte layer 23 and the fourth electrolyte layer 24 may further include hollow silica and/or the above-described radical scavenger for PEMFC, in addition to the ionomer and the high durability enhancer.

The hollow silica may be spherical and have an average particle diameter of 10 to 300 nm, and more preferably, 10 to 100 nm. Herein, the particle size means the diameter when the shape of the hollow silica is spherical, and when it is not spherical, it means the maximum distance among straight line distances from one arbitrary point to another point on the surface of the hollow silica.

In addition, each of the first electrolyte layer 21, the second electrolyte layer 22, the third electrolyte layer 23 and the fourth electrolyte layer 24 of the present invention may include at least one moisture absorbent selected from zeolite, titania, zirconia and montmorillonite.

Meanwhile, each of the first electrolyte layer 21, the second electrolyte layer 22, the third electrolyte layer 23 and the fourth electrolyte layer 24 of the present invention may have a thickness of 1 to 10 $\mu$m, preferably, a thickness of 1 to 8 $\mu$m, more preferably, a thickness of 2 to 5 $\mu$m, and even more preferably, a thickness of 2.5 to 4.5 $\mu$m, and if the thickness is less than 1 $\mu$m, there may be a problem in that the tensile strength decreases, and if it is more than 10 $\mu$m, there may be a problem in that the thinning is disadvantageous.

In addition, each of the first electrolyte layer 21, the second electrolyte layer 22, the third electrolyte layer 23 and the fourth electrolyte layer 24 of the present invention may have an equivalent weight (EW) of a $-SO_3H$ group of 1,100 or less, preferably, 900 or less, more preferably, 500 to 900, even more preferably, 600 to 830, and still even more preferably, 680 to 750, and if the equivalent weight of $-SO_3H$ group is more than 1,100, there may be a problem in that the performance is deteriorated.

Furthermore, the PEMFC composite electrolyte membrane of the present invention may have a dimensional change rate in the MD direction (= longitudinal direction) measured by Relationship Formula 1 below of 10% or less, preferably, 0 to 5%, more preferably, 0 to 3%, and even more preferably, 0.5 to 2%, and the dimensional change rate in the TD direction (= width direction) measured by Relationship Formula 1 below may be 10% or less, preferably, 2 to 8%, more preferably 3 to 7%, and even more preferably, 4 to 6%.

[Relationship Formula 1]

$$\text{Dimensional chage rate} = (B-A)/A \times 100$$

In Relationship Formula 1 above, A represents the initial length of the PEMFC composite electrolyte membrane, and B represents the length measured after leaving the PEMFC composite electrolyte membrane at a temperature of 80°C for 20 minutes.

As described above, the PEMFC composite electrolyte membrane of the present invention shows a low dimensional change rate not only in the MD direction but also in the TD direction, and thus, the dimensional stability is remarkably excellent.

Meanwhile, the PEMFC composite electrolyte membrane of the present invention may have an average thickness of 5 to 30 $\mu$m, preferably, 7 to 20 $\mu$m, more preferably, 10 to 18 $\mu$m, and even more preferably, 12 to 16 $\mu$m, and thus, while having a thin thickness, it has excellent durability and dimensional stability, as well as high tensile strength and excellent performance.

In addition, when the PEMFC composite electrolyte membrane of the present invention is an electrolyte membrane in which a first electrolyte layer, a first support layer and a second electrolyte layer are sequentially stacked, it may satisfy Condition (1) below.

$$\text{Condition (1) } B_1 \leq A_1, \ B_1 \leq A_2$$

In Condition (1) above, $A_1$ represents the thickness of the first electrolyte layer, $A_2$ represents the thickness of the second electrolyte layer, and $B_1$ represents the thickness of the first support layer.

In addition, when the PEMFC composite electrolyte membrane of the present invention is a composite electrolyte membrane in which a first electrolyte layer, a first support layer, a second electrolyte layer, a second support layer and a third electrolyte layer are sequentially stacked, it may satisfy all of Conditions (3) and (4) below.

$$\text{Condition (3) } B_1 \leq A_1, \ B_1 \leq A_2, \ B_1 \leq A_3$$

$$\text{Condition (4) } B_2 \leq A_1,\ B_2 \leq A_2,\ B_2 \leq A_3$$

In Condition (3) above, $A_1$ represents the thickness of the first electrolyte layer 21, $A_2$ represents the thickness of the second electrolyte layer 22, $A_3$ represents the thickness of the third electrolyte layer 23, and $B_1$ represents the thickness of the first support layer 11. Additionally, in Condition (4) above, $A_1$ represents the thickness of the first electrolyte layer 21, $A_2$ represents the thickness of the second electrolyte layer 22, $A_3$ represents the thickness of the third electrolyte layer 23, and $B_2$ represents the thickness of the second support layer 12.

If the PEMFC composite electrolyte membrane of the present invention does not satisfy all of Conditions (3) and (4), there may be a problem in that the uniformity is deteriorated.

Additionally, in the PEMFC composite electrolyte membrane of the present invention, the value of Condition (7)

$$\text{(Condition (7): } \frac{(A_1 + A_2 + A_3)}{(B_1 + B_2)} \text{ )}$$

may satisfy the following range.

Condition (7) $1.5 \leq$ Condition (7) value $\leq 12$, preferably, $1.5 \leq$ Condition (7) value $\leq 9$, more preferably, $2 \leq$ Condition (7) value $\leq 7$, even more preferably, $2.2 \leq$ condition (7)) value $\leq 5$, and still even more preferably, $2.5 \leq$ Condition (7) value $\leq 3.0$

In Condition (7) above, $A_1$ represents the thickness of the first electrolyte layer 21, $A_2$ represents the thickness of the second electrolyte layer 22, $A_3$ represents the thickness of the third electrolyte layer 23, $B_1$ represents the thickness of the first support layer 11, and $B_2$ represents the thickness of the second support layer 12.

If the value of Condition (7) is less than 1.5, there may be a problem in that the composite electrolyte membrane is not prepared, and if it is more than 12, there may be a problem in that the durability is deteriorated.

In addition, the PEMFC composite electrolyte membrane of the present invention may satisfy the value of Condition (8)

$$\text{(Condition (8): } \frac{(A_1 + A_3)}{A_2} \text{ ).}$$

Condition (8) $0.2 \leq$ Condition (8) value $\leq 10$, preferably, $0.5 \leq$ Condition (8) value $\leq 8$, more preferably, $1.0 \leq$ Condition (8) value $\leq 6$, and even more preferably, $1.5 \leq$ Condition (8) value $\leq 4$

In Condition (8) above, $A_1$ represents the thickness of the first electrolyte layer 21, $A_2$ represents the thickness of the second electrolyte layer 22, and $A_3$ represents the thickness of the third electrolyte layer 23.

If the value of Condition (8) is less than 0.2, there may be a problem in that the durability is deteriorated, and if it is more than 10, there may be a problem in that the performance is deteriorated.

[Method for preparing PEMFC composite electrolyte membrane]

The method for preparing a PEMFC composite electrolyte membrane of the present invention may perform a process including step 1 to step 4.

First of all, in step 1 of the method for preparing a PEMFC composite electrolyte membrane of the present invention, a first support layer and a second support layer may be prepared, respectively. In this case, a PTFE (Poly tetra fluoro ethylene) porous support may be used as the first support layer and the second support layer, and the usable PTFE porous support is the same as the previously described PTFE porous support and preparation method.

Next, in step 2 of the method for preparing a PEMFC composite electrolyte membrane of the present invention, a first electrolyte layer may be formed on one surface of the first support layer prepared in step 1, and a third electrolyte layer may be formed on one surface of the second support layer prepared in step 1.

Specifically, in step 2 of the method for preparing a PEMFC composite electrolyte membrane of the present invention, the first electrolyte layer may be formed by applying the ionomer mixture solution to one surface of the first support layer, or impregnating one surface of the first support layer with the ionomer mixture solution, and then drying

In addition, the third electrolyte layer may be formed by applying the ionomer mixture solution to one surface of the second support layer or impregnating one surface of the second support layer with the ionomer mixture solution, and then drying.

The drying of step 2 may be performed by applying heat of 60 to 200°C for 1 minute to 30 minutes, respectively, or preferably by applying heat of 70 to 150°C for 15 minutes to 25 minutes. In this case, if the drying temperature is less than 60°C, the liquid retention of the solution including the ionomer impregnated in the first support layer and/or the second support layer may be reduced, and if it is more than 200°C, adhesion to the electrode may be reduced when preparing an electrolyte membrane and/or membrane-electrode assembly.

Next, in step 3 of the method for preparing a PEMFC composite electrolyte membrane of the present invention, a second electrolyte layer may be formed on the other surface of the first support layer prepared in step 1.

Specifically, step 3 is a process of forming a second electrolyte layer on the other surface of the first support layer on which the first electrolyte layer is formed, and the second electrolyte may be formed by applying the ionomer mixture solution to the other surface of the first support layer or impregnating the other surface of the first support layer with the ionomer mixed solution, and then drying.

The drying in step 3 may be performed by applying heat of 60 to 200°C for 1 minute to 30 minutes, or preferably by applying heat of 70 to 150°C for 5 minutes to 15 minutes. In this case, if the drying temperature is less than 60°C, the liquid retention of the ionomer mixed solution impregnated in the first support layer may deteriorate, and if it is more than 200°C, adhesion to the electrode may be reduced when preparing an electrolyte membrane and/or membrane-electrode assembly.

The ionomer mixed solution of step 2 and step 3 may include an ionomer including at least one selected from a perfluorine-based sulfonated ionomer and a hydrocarbon-based ionomer; the above-described durability enhancer.

In addition, the ionomer mixed solution may further include at least one selected from the above-described radical scavenger, hollow silica and moisture absorbent.

Finally, step 4 of the method for preparing a PEMFC composite electrolyte membrane of the present invention may prepare the PEMFC composite electrolyte membrane in which the second electrolyte layer is stacked on the other surface of the second support layer prepared in step 1, and heat treatment is performed such that a first electrolyte layer, a first support layer, a second electrolyte layer, a second support layer and a third electrolyte layer are sequentially stacked.

Specifically, step 4 is a process of stacking and integrating a first support layer having a first electrolyte layer formed on one surface and a second electrolyte layer formed on the other surface, and a second support layer having a third electrolyte layer formed on one surface, and by stacking the second electrolyte layer formed on the other surface of the first support layer and the second support layer to be in contact with each other and performing heat treatment, it is possible to prepare the PEMFC composite electrolyte membrane of the present invention in which a first electrolyte layer, a first support layer, a second electrolyte layer, a second support layer and a third electrolyte layer are sequentially stacked.

The heat treatment of step 4 may be performed at 100 to 200°C for 1 minute to 20 minutes, and preferably, at 140 to 180°C for 1 minute to 15 minutes, and if the heat treatment temperature is less than 100°C or the heat treatment time is less than 1 minute, the liquid retention of the first electrolyte layer, the second electrolyte layer and/or the third electrolyte layer may be deteriorated, and if the heat treatment temperature is more than 200°C, the adhesiveness (combinability) between the first, second and third electrolyte layers and the first and second support layers may be lowered.

In the first support layer and/or the second support layer of the composite electrolyte membrane subjected to the heat treatment in step 4, the volume of closed pores may be 85 vol% or more, and preferably, 90 vol% or more, based on the total pore volume.

[PEMFC membrane-electrode assembly]

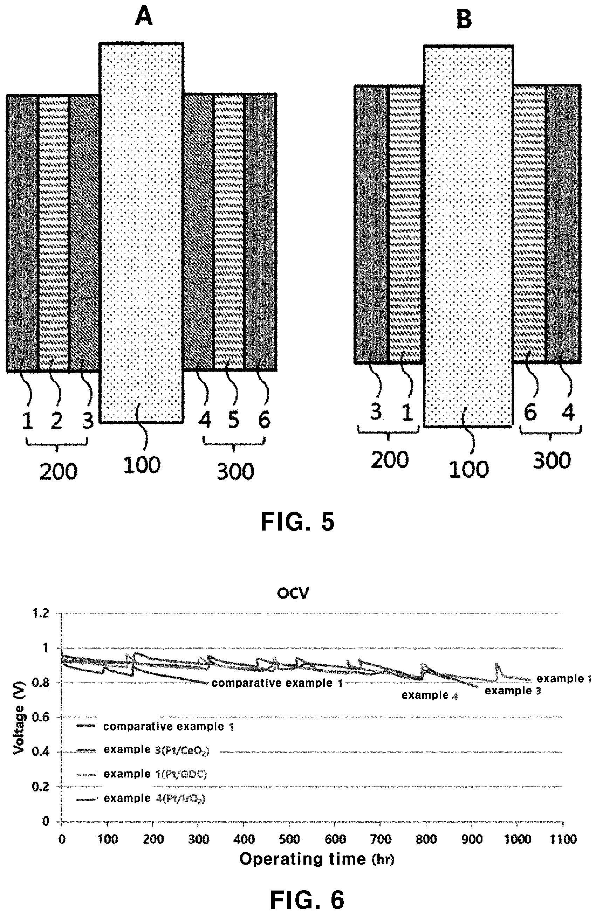

Referring to A and B of FIG. 5, the PEMFC membrane-electrode assembly of the present invention includes an anode 200 (oxidation electrode), the above-mentioned PEMFC composite electrolyte membrane 100 of the present invention and a cathode 300 (reduction electrode).

The membrane-electrode assembly (A in FIG. 5) according to an exemplary embodiment of the present invention has an anode 200 (oxidation electrode) 200 and a cathode 300 (reduction electrode) that are positioned to be opposite to each other with a composite electrolyte membrane 100 interposed therebetween. In this case, the anode 200 may include an anode gas diffusion layer 3, an anode catalyst layer 2 and an anode electrode substrate 1, and the cathode 300 may include a cathode gas diffusion layer 4, a cathode catalyst layer 5, and a cathode electrode substrate 6.

Specifically, the anode 200 may be formed by sequentially stacking an anode gas diffusion layer 3, an anode catalyst layer 2 and an anode electrode substrate 1, and the anode gas diffusion layer 3 may be bonded to one surface of a composite electrolyte membrane 200. In addition, the cathode 300 may be formed by sequentially stacking a cathode gas diffusion layer 4, a cathode catalyst layer 5 and a cathode electrode substrate 6, and the cathode gas diffusion layer 4 may be bonded to the other surface of a composite electrolyte membrane 200.

In addition, the anode 200 of the membrane-electrode assembly (B of FIG. 5) according to an exemplary embodiment of the present invention may include an anode gas diffusion layer 3 and an anode electrode substrate 1, and the cathode 300 may include a cathode gas diffusion layer 4 and a cathode electrode substrate 6. In this case, the anode electrode substrate may be composed of an anode catalyst electrode, and the cathode electrode substrate may be composed of a cathode catalyst electrode.

The membrane-electrode assembly of the present invention may be formed by disposing the anode 200, the composite electrolyte membrane 100, and the cathode 300, respectively, and then fastening the same, or by compressing the same at high temperature and high pressure.

The anode gas diffusion layer 3 may be formed by applying a gas diffusion layer forming material to one surface of the composite electrolyte membrane 100 or by coating a gas diffusion layer forming material on one surface of the anode electrode substrate 1.

The anode gas diffusion layer 3 may be provided to prevent the rapid diffusion of fuel injected into the fuel cell and to prevent the deterioration of ionic conductivity. In addition, the anode gas diffusion layer 3 may control the diffusion rate of fuel through heat treatment or electrochemical treatment. In addition, the anode gas diffusion layer 3 serves as a current conductor between the PEMFC composite electrolyte membrane 100 and the anode catalyst layer 2, and becomes a passage for gas as a reactant and water as a product. Therefore, the anode gas diffusion layer 3 may have a porous structure with a porosity of 20% to 90% such that gas can pass through. The thickness of the anode gas diffusion layer 3 may be appropriately adopted as needed, and may be, for example, 100 to 400 $\mu$m. If the thickness of the anode gas diffusion layer 3 is 100 $\mu$m or less, electrical contact resistance between the anode catalyst layer 2 and the anode electrode substrate 1 increases, and the structure may become unstable due to compression. In addition, if the thickness of the anode gas diffusion layer 3 is more than 400 $\mu$m, the movement of gas as a reactant may become difficult.

In addition, the anode gas diffusion layer 3 may be formed by including a carbon-based material and a fluorine-based resin. Carbon-based materials may include at least one selected from the group consisting of graphite, carbon black, acetylene black, Denka black, KetjenBlack, activated carbon, mesoporous carbon, carbon nanotubes, carbon nanofibers, carbon nanohorns, carbon nanorings, carbon nanowires, fullerenes (C60) and super P, but the present invention is not limited thereto. In addition, fluorine-based resins may include at least one selected from the group consisting of polytetrafluoroethylene, polyvinylidene fluoride (PVdF), polyvinyl alcohol, cellulose acetate, polyvinylidene fluoride-hexafluoropropylene copolymer or styrene-butadiene rubber (SBR). In addition, the fuel may be a liquid fuel such as formic acid solution, methanol, formaldehyde or ethanol.

The anode catalyst layer 2 is a layer into which an oxidation catalyst is introduced, and the anode catalyst layer 2 may be formed by applying a catalyst layer forming material on the anode gas diffusion layer 3.

A metal catalyst or a metal catalyst which is supported on a carbon-based support may be used as the material for forming a catalyst layer. Representatively, at least one selected from the group consisting of platinum, ruthenium, platinum-ruthenium alloy, platinum-osmium alloy, platinum-palladium alloy and platinum-transition metal alloy may be used as the metal catalyst. In addition, the carbon-based support may include at least one selected from the group consisting of graphite, carbon black, acetylene black, Denka black, KetjenBlack, activated carbon, mesoporous carbon, carbon nanotubes, carbon nanofibers, carbon nanohorns, carbon nanorings, carbon nanowires, fullerene and super P.

In addition, the anode catalyst layer 2 may include a conductive support and an ion conductive binder (not illustrated). Additionally, the anode catalyst layer 2 may include a main catalyst that is attached to a conductive support. The conductive support may be carbon black, and the ion conductive binder may be a Nafion ionomer or a sulfonated polymer. In addition, the main catalyst may be a metal catalyst, and for example, platinum (Pt). The anode catalyst layer 2 may be formed by using an electroplating method, a spray method, a painting method, a doctor blade method or a transfer method.

The anode electrode substrate 1 may use a conductive substrate which is selected from the group consisting of carbon paper, carbon cloth and carbon felt, but the present invention is not limited thereto, and all anode electrode materials that are applicable to polymer electrolyte fuel cells may be used. The anode electrode substrate 1 may be formed on one surface of the anode catalyst layer 2 through a conventional deposition method, and after forming the anode catalyst layer 2 on the anode electrode substrate 1, it may be formed by placing the anode catalyst layer 2 and the anode electrode base 1 to be in contact with each other on the anode gas diffusion layer 3 (refer to A in FIG. 5). In addition, an anode gas diffusion layer 3 may be formed on one surface of the anode electrode substrate 1 (refer to B in FIG. 5).

The cathode gas diffusion layer 4 may be formed by applying a gas diffusion layer forming material to the other surface of the composite electrolyte membrane 100 or by applying a gas diffusion layer forming material to one surface of the cathode electrode substrate 6.

The cathode gas diffusion layer 4 may be provided to prevent the rapid diffusion of gas injected into the cathode 300 and to uniformly distribute the gas injected into the cathode 300. In addition, the cathode gas diffusion layer 4 serves as a current conductor between the composite electrolyte membrane 100 for PEMFC and the cathode catalyst layer 5, and becomes a passage for gas as a reactant and water as a product. Therefore, the cathode gas diffusion layer 4 may have a porous structure with a porosity of 20% to 90% such that gas can pass through. The thickness of the cathode gas diffusion layer 4 may be appropriately adopted as needed, and may be, for example, 100 to 400 $\mu$m. If the thickness of the cathode gas diffusion layer 4 is less than 100 $\mu$m, electrical contact resistance between the cathode catalyst layer 5 and the cathode electrode substrate 6 increases, and the structure may become unstable due to compression. In addition, if the thickness of the cathode gas diffusion layer 4 is more than 400 μm, the movement of gas as a reactant may become difficult.

In addition, the cathode gas diffusion layer 4 may be formed by including a carbon-based material and a fluorine-based resin. Carbon-based materials may include at least one selected from the group consisting of graphite, carbon black, acetylene black, Denka black, KetjenBlack, activated carbon, mesoporous carbon, carbon nanotubes, carbon nanofibers, carbon nanohorns, carbon nanorings, carbon nanowires, fullerenes (C60) and super P, but the present invention is not limited thereto. In addition, fluorine-based resins may include at least one selected from the group consisting of polytetrafluoroethylene, polyvinylidene fluoride (PVdF), polyvinyl alcohol, cellulose acetate, polyvinylidene fluoride-hexafluoropropylene copolymer or styrene-butadiene rubber (SBR). In addition, the fuel may be a liquid fuel such as formic acid solution, methanol, formaldehyde or ethanol.

The cathode catalyst layer 5 is a layer into which a reduction catalyst is introduced, and the cathode catalyst layer 5 may be formed by coating a catalyst layer forming material on the cathode gas diffusion layer 4.

A metal catalyst or a metal catalyst which is supported on a carbon-based support may be used as the material for forming a catalyst layer. Representatively, at least one selected from the group consisting of platinum, ruthenium, platinum-ruthenium alloy, platinum-osmium alloy, platinum-palladium alloy and platinum-transition metal alloy may be used as the metal catalyst. In addition, the carbon-based support may include at least one selected from the group consisting of graphite, carbon black, acetylene black, Denka black, KetjenBlack, activated carbon, mesoporous carbon, carbon nanotubes, carbon nanofibers, carbon nanohorns, carbon nanorings, carbon nanowires, fullerene and super P.

In addition, the cathode catalyst layer 5 may include a conductive support and an ion conductive binder (not illustrated). In addition, the cathode catalyst layer 5 may include a main catalyst that is attached to the conductive support. The conductive support may be carbon black, and the ion conductive binder may be a Nafion ionomer or a sulfonated polymer. In addition, the main catalyst may be a metal catalyst, and for example, platinum (Pt). The cathode catalyst layer 5 may be formed by using an electroplating method, a spray method, a painting method, a doctor blade method or a transfer method.

For the cathode electrode substrate 6, a conductive substrate selected from the group consisting of carbon paper, carbon cloth and carbon felt may be used, but the present invention is not limited thereto, and all cathode electrode materials that are applicable to a polymer electrolyte fuel cell may be used. The cathode electrode substrate 6 may be formed on one surface of the cathode catalyst layer 5 through a conventional deposition method, and after forming the cathode catalyst layer 5 on the cathode electrode substrate 6, it may be formed by placing the cathode catalyst layer 5 and the cathode electrode substrate 6 to be in contact with the cathode gas diffusion layer 4 (refer to A in FIG. 5). In addition, a cathode gas diffusion layer 4 may be formed on one surface of the cathode electrode substrate 6 (refer to B in FIG. 5).

Meanwhile, the polymer electrolyte membrane fuel cell according to an exemplary embodiment of the present invention is configured by including at least one electricity generating unit for generating electrical energy through an oxidation reaction of a fuel and a reduction reaction of an oxidizing agent, a fuel supply unit for supplying the aforementioned fuel to the electricity generating unit, and an oxidizer gap unit for supplying an oxidizer to the electricity generating unit.

The electricity generating unit may be configured by including at least one membrane-electrode assembly of the present invention, and having separators for supplying fuel and an oxidizer disposed at both ends of the membrane-electrode assembly of the present invention. At least one of these electricity generating units may form a stack.

In this case, since the arrangement form or preparation method of the polymer electrolyte membrane fuel cell of the present invention may be formed without limitation as long as it is applicable to a polymer electrolyte membrane fuel cell, it may be applied in various ways with reference to the related art.

Although the present invention will be described in more detail through the following examples, the following examples are not intended to limit the scope of the present invention, which should be interpreted to aid understanding of the present invention.

**[Example]**

**Example 1: Preparation of durability enhancer (Pt/GDC) and electrolyte membrane-forming solution**

**(1) Preparation of durability enhancer**

GDC represented by Chemical Formula 1-1 below was prepared as a carrier by a method of obtaining a coprecipitate by dropping a mixed solution of a cerium precursor (cerium nitrate) and a gadolinium precursor (gadolinium nitrate) into an aqueous solution under certain environmental conditions. In this case, the particle size ($D_{50}$) of the carrier was 180 nm.

[Chemical Formula 1-1]        $Gd_xCe_{1-x}O_{2-y}$

In Chemical Formula 1-1, x is 0.1, y is an oxygen vacancy value that makes the compound electrically neutral, and is a fixed number that satisfies $0<y\leq0.25$.

Next, platinum in a precursor state was prepared, the carrier was mixed therein, and a reducing agent was used to perform a process of inducing a reduction reaction from platinum in a precursor state to platinum metal in a nanoparticle state, and thus, platinum nanoparticles were deposited on the surface of the carrier to prepare an integrated durability enhancer (Pt/GDC).

The content of the platinum nanoparticles in the prepared durability enhancer was 0.10 wt.%, and the average particle size ($D_{50}$) of the platinum powder was about 17 nm.

**(2) Preparation of electrolyte membrane-forming solution**

A perfluorine sulfonic acid-based ionomer (trade name: Aquivion D72-25DS, Solvay) having an equivalent weight of $-SO_3H$ of 720 was prepared.

An electrolyte membrane-forming solution was prepared by mixing 0.5 wt.% of the durability enhancer (Pt/GDC), 0.97 wt.% of the radical scavenger (CeZnO) and the remaining amount of the ionomer.

**Example 2: Preparation of durability enhancer (Pt/GDC) and electrolyte membrane-forming solution**

**(1) Preparation of durability enhancer**

A durability enhancer was prepared in the same manner as in Example 1, except that GDC represented by Chemical Formula 1-2 below was used as a carrier.

[Chemical Formula 1-2]        $Gd_xCe_{1-x}O_{2-y}$

In Chemical Formula 1-1, x is 0.2, and y is an oxygen vacancy value that makes the compound electrically neutral, and is a fixed number that satisfies $0<y\leq0.25$.

**(2) Preparation of electrolyte membrane-forming solution**

An electrolyte membrane-forming solution was prepared by mixing 0.5 wt.% of the durability enhancer (Pt/GDC) and the remaining amount of the ionomer by using the same perfluorine sulfonic acid-based ionomer as in Example 1.

**Example 3: Preparation of durability enhancer (Pt/CeO$_2$) and electrolyte membrane-forming Solution**

**(1) Preparation of durability enhancer**

$CeO_2$ having a particle size ($D_{50}$) of 177 nm was prepared as a carrier, and the same platinum precursor used in Example 1 was prepared.

Next, platinum in a precursor state was prepared, the carrier was mixed therein, and a reducing agent was used to perform a process of inducing a reduction reaction from platinum in a precursor state to platinum metal in a nanoparticle state, and thus, platinum nanoparticles were deposited on the surface of the carrier to prepare an integrated durability enhancer (Pt/CeO$_2$).

The content of the platinum nanoparticles in the prepared durability enhancer was 0.10 wt.%, and the average particle size ($D_{50}$) of the platinum powder was about 15 nm.

**(2) Preparation of electrolyte membrane-forming solution**

An electrolyte membrane-forming solution was prepared by mixing 0.5 wt.% of the durability enhancer (Pt/CeO$_2$) and the remaining amount of the ionomer by using the same perfluorine sulfonic acid-based ionomer as in Example 1.

**Example 4: Preparation of durability enhancer (Pt/IrO₂) and electrolyte membrane-forming solution**

**(1) Preparation of durability enhancer**

$IrO_2$ having a particle size ($D_{50}$) of 242 nm was prepared as a carrier, and the platinum precursor used in Example 1 was prepared.

Next, platinum in a precursor state was prepared, the carrier was mixed therein, and a reducing agent was used to perform a process of inducing a reduction reaction from platinum in a precursor state to platinum metal in a nanoparticle state, and thus, platinum nanoparticles were deposited on the surface of the carrier to prepare an integrated durability enhancer ($Pt/IrO_2$).

The content of the platinum nanoparticles in the prepared durability enhancer was 0.10 wt.%, and the average particle size ($D_{50}$) of the platinum powder was about 25 nm.

**(2) Preparation of electrolyte membrane-forming solution**

An electrolyte membrane-forming solution was prepared by mixing 0.5 wt.% of the durability enhancer ($Pt/IrO_2$) and the remaining amount of the ionomer by using the same perfluorine sulfonic acid-based ionomer as in Example 1.

**Comparative Example 1**

Without using a high durability enhancer, the perfluorine sulfonic acid-based ionomer of Example 1 itself was prepared as an electrolyte membrane-forming solution.

**Examples 5 to 8 and Comparative Examples 2 to 6**

The durability enhancer and the electrolyte membrane-forming solution were prepared in the same manner as in Example 1, except that the electrolyte membrane forming-solution was prepared by varying the durability enhancer or the content thereof as shown in Table 1 below.

[Table 1]

| Classification | Durability Enhancer | | | | | Ionomer |
|---|---|---|---|---|---|---|
| | Particle Size of Pt $(D_{50})$/ Content | Particle Size of Carrier $(D_{50})$/ Content | Type of Carrier | Content of Durability Enhancer in Electrolyte Forming Solution | BET Specific Surface Area | |
| Example 1 | 17nm/ 0.1 wt.% | 180nm/1.0 wt.% | GDC (Chemical Formula 1-1) | 0.5 wt.% | 151 $m^2$/g | Remaining amount of 100 wt.% |
| Example 2 | 22nm/ 0.1 wt.% | 223nm/ 1.0 wt.% | GDC (Chemical Formula 1-2) | 0.5 wt.% | 116 $m^2$/g | |
| Example 3 | 15nm/ 0.1 wt.% | 177nm/ 1.0 wt.% | $CeO_2$ | 0.5 wt.% | 148 $m^2$/g | |
| Example 4 | 25nm/ 0.1 wt.% | 242 nm/ 1.0 wt.% | $IrO_2$ | 0.5 wt.% | 90 $m^2$/g | |
| Example 5 | 17nm/ 3.0 wt.% | 180nm/1.0 wt.% | GDC (Chemical Formula 1-1) | 0.5 wt.% | 119 $m^2$/g | |
| Example 6 | 17nm/ 0.05 wt.% | 180nm/ 1.0 wt.% | GDC (Chemical Formula 1-1) | 0.5 wt.% | 142 $m^2$/g | |
| Example 7 | 17 nm/ 0.1 wt.% | 180 nm/ 1.0 wt.% | GDC (Chemical Formula 1-1) | 0.05 wt.% | 155 $m^2$/g | |
| Example 8 | 17 nm/ 0.1 wt.% | 180 nm/ 1.0 wt.% | GDC (Chemical Formula 1-1) | 17.0 wt.% | 157 $m^2$/g | |
| Comparative Example 1 | - | - | - | - | - | 100 wt.% |

(continued)

| Classification | Durability Enhancer | | | | | Ionomer |
|---|---|---|---|---|---|---|
| | Particle Size of Pt $(D_{50})$/ Content | Particle Size of Carrier $(D_{50})$/ Content | Type of Carrier | Content of Durability Enhancer in Electrolyte Forming Solution | BET Specific Surface Area | |
| Comparative Example 2 | 17nm/ 6.5 wt.% | 180nm/ 1.0 wt.% | GDC (Chemical Formula 1-1) | 0.5 wt.% | 107 m$^2$/g | Remaining amount of 100 wt.% |
| Comparative Example 3 | 17nm/ 0.007 wt.% | 180nm/ 1.0 wt.% | GDC (Chemical Formula 1-1) | 0.5 wt.% | 139 m$^2$/g | |
| Comparative Example 4 | 120nm/ 0.1 wt.% | 180nm/ 1.0 wt.% | GDC (Chemical Formula 1-1) | 0.5 wt.% | 128 m$^2$/g | |
| Comparative Example 5 | 17nm/ 0.1 wt.% | 1025nm/1.0 wt.% | GDC (Chemical Formula 1-1) | 0.5 wt.% | 23 m$^2$/g | |
| Comparative Example 6 | 17nm/ 0.1 wt.% | 180nm/1.0 wt.% | GDC (Chemical Formula 1-1) | 21.0 wt.% | 146 m$^2$/g | |

**Experimental Example 1: Evaluation of durability of electrolyte membrane and analysis experiments of fluorine ion release rate**

In order to evaluate the durability of the electrolyte membrane, each of the electrolyte membrane-forming solutions prepared in Examples 1 to 8 and Comparative Examples 2 to 6 was coated on a film, and then dried to prepare a electrolyte membrane with a single-layer structure having a thickness of 10 μm.

**(1) Measurement of fluoride ion release rate (FER, umol/g·h)**

After preparing a Fenton solution by mixing iron sulfate lead hydrate and hydrogen peroxide, each of the electrolyte membranes prepared in the examples and comparative examples was added to the Fenton solution, and then left at 80°C for 120 hours, and then, the fluorine ion release rate was measured. The electrolyte membrane was chemically degraded by the radicals of the Fenton solution to release fluorine ions (F⁻), and durability was evaluated by measuring the concentration of fluorine ions in the Fenton solution, and the results are shown in Table 2 below.
In addition, the OCV measurement graphs of Example 1, Examples 3 and 4, and Comparative Example 1 are shown in FIG. 6.

**(2) Measurement of OCV (open circuit voltage) holding durability**

After preparing a membrane-electrode assembly by attaching a catalyst and a gas diffusion layer (GDL) to each of the electrolyte membranes of the examples and comparative Examples, open circuit voltages (OCV) under harsher environmental conditions (90°C/30% relative humidity) than actual cell operating conditions were measured, and the results are shown in Table 2 below.

[Table 2]

| Classification | FER (umol/g·h) | OCV Final Lifespan Time (hr) |
|---|---|---|
| Example 1 | 1.83 | 1,027 |
| Example 2 | 1.88 | 986 |
| Example 3 | 2.45 | 914 |
| Example 4 | 2.81 | 851 |
| Example 5 | 2.21 | 652 |
| Example 6 | 3.75 | 777 |
| Example 7 | 9.55 | 425 |
| Example 8 | 1.27 | 912 |
| Comparative Example 1 | 15.10 | 318 |
| Comparative Example 2 | 2.98 | 612 |
| Comparative Example 3 | 5.26 | 513 |
| Comparative Example 4 | 2.96 | 758 |
| Comparative Example 5 | 3.12 | 739 |
| Comparative Example 6 | 1.39 | 889 |

Looking at the measurement results of the fluorine ion release rate in Table 2, the electrolyte membrane of Comparative Example 1 exhibited a high fluoride ion release rate of about 15.1 umol/g·h. In contrast, the electrolyte membrane of Example 3 where $Pt/CeO_2$ was applied as a durability enhancer exhibited a fluorine ion release rate of 2.45umol/g·h, and the electrolyte membranes of Example 1 and Example 4 where Pt/GDC and $Pt/IrO_2$ were applied as durability enhancers exhibited fluorine ion release rates of 1.83umol/g·h and 2.81umol/g·h, respectively, and it was confirmed that the fluoride ion release rate significantly decreased as the durability enhancer was applied.

In addition, looking at the OCV (open circuit voltage) holding durability measurement results in Table 2, it was confirmed that there was a difference in voltage drop between each of the examples and comparative examples according to long-time operation. In addition, referring to FIG. 5, in Comparative Example 1 to which the high durability enhancer was not applied, the voltage drop occurred rapidly, and the lifespan expired after 318 hours, and Example 3 ($Pt/CeO_2$) showed durability of 914 hours or more, Example 1 (Pt/GDC) showed durability of 1,027 hours or more, and Example 4 ($Pt/IrO_2$) showed durability of 851 hours or more.

Additionally, in the case of Comparative Example 2 where the Pt content in the durability enhancer was more than 6.0 wt.%, compared to Example 5, the FER value rather increased, and there was a problem in that the lifespan time was shortened. Additionally, in the case of Comparative Example 3 where the Pt content in the durability enhancer was less than 0.1 wt.%, compared to Example 6 (Pt 0.05 wt.%), the FER value was high, and there was a problem in that the lifespan time was greatly shortened.

Additionally, in the case of Comparative Example 4 where the average particle size of Pt in the durability enhancer was more than 100 nm and Comparative Example 5 where the average particle size of the carrier in the durability enhancer was more than 1,000 nm, compared to Example 4, the durability was rather poor, and the FER value was high. Additionally, in the case of Comparative Example 5 where the average particle size of the carrier in the durability enhancer was more than 1,000 nm, and additionally, in the case of Comparative Example 6 where the durability enhancer content in the electrolyte forming solution was used at more than 20.0 wt.%, there was no benefit due to the excessive usage of the durability enhancer.

**Example 9-1: Preparation of high durability enhancer ($Pt/CeO_2$ composite) and electrolyte membrane-forming solution**

**(1) Preparation of high durability enhancer**

$CeO_2$ having a particle size ($D_{50}$) of 177 nm was prepared as a carrier.

Next, by performing a process of inducing a reduction reaction from platinum in a precursor state to platinum metal in a nanoparticle state by preparing platinum in a precursor state, mixing the $CeO_2$ carrier therein and using a reducing agent, platinum nanoparticles were deposited on the surface of the carrier to prepare an integrated high durability enhancer (Pt/CeO$_2$ composite).

The content of the platinum nanoparticles in the prepared high durability enhancer was 0.10 wt.%, and the average particle size (D$_{50}$) of the platinum particles was about 5 nm.

**(2) Preparation of electrolyte membrane-forming solution**

A perfluorine sulfonic acid-based ionomer (trade name: Aquivion D72-25DS, Solvay) having an equivalent weight of -SO$_3$H of 720 was prepared.

An electrolyte membrane-forming solution was prepared by mixing 0.5 wt.% of the high durability enhancer (Pt/CeO$_2$ composite) and the remaining amount of the ionomer.

**Examples 9-2 to 9-4 and Comparative Examples 7-1 to 7-2**

Electrolyte membrane-forming solutions were prepared in the same manner as in Example 9-1, except that Examples 9-2 to 9-4 were respectively performed by preparing electrolyte membrane-forming solutions such that the content of platinum particles in the high durability enhancer (Pt/CeO$_2$ composite) was 1.0 wt.%, 3.0 wt.% and 5.5 wt.% as shown in Table 3 below, respectively.

However, in Comparative Example 7-1, only CeO$_2$ was used as the durability enhancer without using platinum particles, and in Comparative Example 7-2, a high durability enhancer was prepared such that the content of platinum particles was 6.0 wt.%.

**Example 10-1: Preparation of high durability enhancer (Pt/IrO$_2$ composite) and electrolyte membrane-forming solution**

**(1) Preparation of high durability enhancer**

IrO$_2$ having a particle size (D$_{50}$) of 242 nm was prepared as a carrier, and the platinum precursor used in Example 9-1 was prepared.

Next, platinum in a precursor state was prepared, the carrier was mixed therein, and a reducing agent was used to perform a process of inducing a reduction reaction from platinum in a precursor state to platinum metal in a nanoparticle state, and thus, platinum nanoparticles were deposited on the surface of the carrier to prepare an integrated high durability enhancer (Pt/IrO$_2$ composite).

The content of the platinum nanoparticles in the prepared high durability enhancer was 1.0 wt.%, and the average particle size (D$_{50}$) of the platinum particles was about 12 nm.

**(2) Preparation of electrolyte membrane-forming solution**

An electrolyte membrane-forming solution was prepared by mixing 0.5 wt.% of the high durability enhancer (Pt/IrO$_2$ composite) and the remaining amount of the ionomer by using the same perfluorine sulfonic acid-based ionomer as in Example 9-1.

**Example 10-2**

A high durability enhancer (Pt/IrO$_2$ composite) was prepared in the same manner as in Example 10-1, except that after preparing a high durability enhancer such that the content of platinum was 0.1 wt.%, 0.5 wt.% of the high durability enhancer (Pt/IrO$_2$ composite) and the remaining amount of the ionomer were mixed to prepare an electrolyte membrane-forming solution.

**Example 11-1: Preparation of high durability enhancer (Pt/SnO$_2$ composite) and electrolyte membrane-forming solution**

**(1) Preparation of high durability enhancer**

SnO$_2$ having a particle size (D$_{50}$) of 353 nm was prepared as a carrier, and the platinum precursor used in Example 9-1 was prepared.

Next, platinum in a precursor state was prepared, the carrier was mixed therein, and a reducing agent was used to perform a process of inducing a reduction reaction from platinum in a precursor state to platinum metal in a nanoparticle state, and thus, platinum nanoparticles were deposited on the surface of the carrier to prepare an integrated high durability enhancer (Pt/SnO$_2$ composite).

The content of the platinum nanoparticles in the prepared high durability enhancer was 1.0 wt.%, and the average particle size (D$_{50}$) of the platinum particles was about 9 nm.

**(2) Preparation of electrolyte membrane-forming solution**

An electrolyte membrane-forming solution was prepared by mixing 0.5 wt.% of the high durability enhancer (Pt/SnO$_2$ composite) and the remaining amount of the ionomer by using the same perfluorine sulfonic acid-based ionomer as in Example 9-1.

**Example 11-2**

A high durability enhancer (Pt/SnO$_2$ composite) was prepared in the same manner as in Example 11-1, except that after preparing the high durability enhancer such that the content of platinum was 0.1 wt.%, 0.5 wt.% of the high durability enhancer (Pt/SnO$_2$ composite) and the remaining amount of the ionomer were mixed to prepare an electrolyte membrane-forming solution.

**Example 12-1: Preparation of high durability enhancer (Pt/Ti$_4$O$_7$ composite) and electrolyte membrane-forming solution**

**(1) Preparation of high durability enhancer**

Ti$_4$O$_7$ having a particle size (D$_{50}$) of 502 nm was prepared as a carrier, and the platinum precursor used in Example 1 was prepared.

Next, platinum in a precursor state was prepared, the carrier was mixed therein, and a reducing agent was used to perform a process of inducing a reduction reaction from platinum in a precursor state to platinum metal in a nanoparticle state, and thus, platinum nanoparticles were deposited on the surface of the carrier to prepare an integrated high durability enhancer (Pt/Ti$_4$O$_7$ composite).

The content of the platinum nanoparticles in the prepared high durability enhancer was 1.0 wt.%, and the average particle size (D$_{50}$) of the platinum particles was about 7 nm.

**(2) Preparation of electrolyte membrane-forming solution**

An electrolyte membrane-forming solution was prepared by mixing 0.5 wt.% of the high durability enhancer (Pt/Ti$_4$O$_7$ composite) and the remaining amount of the ionomer by using the same perfluorine sulfonic acid-based ionomer as in Example 9-1.

**Example 12-2**

A high durability enhancer (Pt/Ti$_4$O$_7$ composite) was prepared in the same manner as in Example 12-2, and after preparing a high durability enhancer such that the platinum content was 0.1 wt.%, an electrolyte membrane-forming solution was prepared by mixing 0.5 wt.% of a high durability enhancer (Pt/Ti$_4$O$_7$ composite) and the remaining amount of the ionomer.

**Example 13**

The same electrolyte membrane-forming solution as in Example 9-1 was prepared, but the content of the high durability enhancer was prepared to be 17.0 wt.%.

**Comparative Examples 7-3 to 7-5**

The high durability enhancers and the electrolyte membrane-forming solutions were prepared in the same manner as in Example 1-1, except that the particle size of platinum, the carrier particle size or the content of the high durability enhancer in the high durability enhancer were changed as shown in Table 1 below to respectively prepare the electrolyte-membrane forming solutions.

[Table 3]

| Classification | High Durability Enhancer | | | | | Ionomer |
| --- | --- | --- | --- | --- | --- | --- |
| | Particle Size of Pt ($D_{50}$)/ Content | Particle Size of Carrier ($D_{50}$)/Content | Type of Carrier | Content of High Durability Enhancer in Electrolyte-Forming Solution | BET Specific Surface Area | |
| Example 9-1 | 5nm/ 0.1 wt.% | 177nm/ remaining amount | $CeO_2$ | 0.5 wt.% | 150 m$^2$/g | Remaining amount in 100 wt.% |
| Example 9-2 | 5nm/ 1.0 wt.% | 177nm/ remaining amount | $CeO_2$ | 0.5 wt.% | 147 m$^2$/g | |
| Example 9-3 | 5nm/ 3.0 wt.% | 177nm/ remaining amount | $CeO_2$ | 0.5 wt.% | 155 m$^2$/g | |
| Example 9-4 | 5nm/ 5.5 wt.% | 177nm/ remaining amount | $CeO_2$ | 0.5 wt.% | 142 m$^2$/g | |
| Example 10-1 | 12nm/ 1.0 | 242 nm/ | $IrO_2$ | 0.5 wt.% | 90 m$^2$/g | |

(continued)

| Classification | High Durability Enhancer | | | | | Ionomer |
|---|---|---|---|---|---|---|
| | Particle Size of Pt $(D_{50})$/ Content | Particle Size of Carrier $(D_{50})$/Content | Type of Carrier | Content of High Durability Enhancer in Electrolyte-Forming Solution | BET Specific Surface Area | |
| | wt.% | remaining amount | | | | |
| Example 10-2 | 12nm/ 0.1 wt.% | 242 nm/ remaining amount | $IrO_2$ | 0.5 wt.% | 92 m$^2$/g | |
| Example 11-1 | 9nm/ 1.0 wt.% | 353 nm/ remaining amount | $SnO_2$ | 0.5 wt.% | 83 m$^2$/g | |
| Example 11-2 | 9nm/ 0.1 wt.% | 353 nm/ remaining amount | $SnO_2$ | 0.5 wt.% | 77 m$^2$/g | |
| Example 12-1 | 7nm/ 1.0 wt.% | 502nm/ remaining amount | $Ti_4O_7$ | 0.5 wt.% | 50 m$^2$/g | |
| Example 12-2 | 7nm/ 0.1 wt.% | 502nm/ remaining amount | $Ti_4O_7$ | 0.5 wt.% | 64 m$^2$/g | |
| Example 13 | 5nm/ 1.0 wt.% | 177nm/ remaining amount | $CeO_2$ | 17.0 wt.% | 151 m$^2$/g | |
| Comparative Example 7-1 | - | 177nm/ remaining amount | $CeO_2$ | 0.5 wt.% | 146 m$^2$/g | |
| Comparative Example 7-2 | 5nm/ 6.0 wt.% | 177nm/ remaining amount | $CeO_2$ | 0.5 wt.% | 132 m$^2$/g | |
| Comparative Example 7-3 | 63nm/ 1.0 wt.% | 177nm /1.0 wt.% | $CeO_2$ | 0.5 wt.% | 134 m$^2$/g | |
| Comparative Example 7-4 | 5nm/ 1.0 wt.% | 2,025nm/1.0 wt.% | $CeO_2$ | 0.5 wt.% | 56 m$^2$/g | |
| Comparative Example 7-5 | 5nm/ 1.0wt.% | 177nm/ remaining amount | $CeO_2$ | 20.8 wt.% | 130 m$^2$/g | |

**Experimental Example 2: Evaluation of durability of electrolyte membrane and analysis of fluorine ion release rate**

In order to evaluate the durability of the electrolyte membrane, each of the electrolyte membrane-forming solutions prepared in Examples 9-1 to 13 and Comparative Examples 7-1 to 7-5 was coated on a film, and then dried to respectively prepare an electrolyte membrane having a single layer structure with a thickness of 10 $\mu$m.

In addition, the fluoride ion release rate and OCV holding durability were measured in the same manner as in Experimental Example 1, and the results are shown in Table 4 below.

The control group in Table 4 below is an electrolyte membrane prepared without using a platinum catalyst or a carrier.

[Table 4]

| Classification | Content of Pt (wt. %) | Type of Carrier | FER (umol/g·h) | OCV Final Lifespan Time (hr) |
|---|---|---|---|---|
| Example 9-1 | 0.1 | $CeO_2$ | 2.45 | 914 |
| Example 9-2 | 1.0 | $CeO_2$ | 0.64 | 1305 |
| Example 9-3 | 3.0 | $CeO_2$ | 0.78 | 1291 |
| Example 9-4 | 5.5 | $CeO_2$ | 1.05 | 1327 |
| Example 10-1 | 1.0 | $IrO_2$ | 1.15 | 1250 |
| Example 10-2 | 0.1 | $IrO_2$ | 2.81 | 851 |
| Example 11-1 | 1.0 | $SnO_2$ | 0.85 | 1286 |
| Example 11-2 | 0.1 | $SnO_2$ | 2.51 | 908 |
| Example 12-1 | 1.0 | $Ti_4O_7$ | 0.79 | 1288 |
| Example 12-2 | 0.1 | $Ti_4O_7$ | 2.55 | 921 |
| Example 13 | 1.0 | $CeO_2$ | 0.64 | 1144 |
| Control Group | - | - | 15.10 | 318 |
| Comparative Example 7-1 | 0 | $CeO_2$ | 9.21 | 462 |
| Comparative Example 7-2 | 6.0 | $CeO_2$ | 1.13 | 1276 |
| Comparative Example 7-3 | 1.0 | $CeO_2$ | 3.41 | 683 |
| Comparative Example 7-4 | 1.0 | $CeO_2$ | 3.11 | 725 |
| Comparative Example 7-5 | 1.0 | $CeO_2$ | 0.72 | 1115 |

Looking at the measurement results of the fluoride ion release rate in Table 4, in the case of the control group electrolyte membrane to which Pt and the carrier were not applied, it exhibited a fluoride ion release rate of about 15.10 umol/g·h, and in the case of the electrolyte membrane of Comparative Example 7-1 to which only the carrier was applied, it exhibited a high fluoride ion release rate of about 9.21 umol/g·h.

In contrast, in the case of the electrolyte membranes of Examples 9-1 to 9-4 to which Pt/$CeO_2$ was applied as a high durability enhancer, it was confirmed that they had a very low fluorine ion release rate (FER) of 3.50 umol/g·h or less. In addition, Examples 10-1 to 10-2, Examples 11-1 to 11-2 and Examples 12-1 to 12-2 which were prepared by respectively using $IrO_2$, $SnO_2$ or $Ti_4O_7$ as a carrier also exhibited the results that the FER reduction effects were excellent.

Overall, as the platinum content in the high durability enhancer increased, it showed the results that the FER (fluoride ion release rate) decreased. In the case of Comparative Example 7-2 using 6.0 wt.% of $CeO_2$ as a carrier, compared to Example 9-4, the results showed no increase in the effects of reducing FER.

In addition, looking at the OCV (open circuit voltage) holding durability measurement results in Table 4, it was confirmed that there was a difference in voltage drops between each example and comparative example according to long-time operation.

Additionally, in the case of Comparative Example 7-2 in which the Pt content in the high durability enhancer was more than 5.5 wt.%, compared to Example 9-4, there were problems in that the FER value rather increased and the lifespan time was shortened. In the case of Comparative Example 7-1 which did not use Pt in the high durability enhancer, there were problems in that the FER value was high, and the lifespan time was greatly shortened.

Additionally, in the case of Comparative Example 7-3 in which the particle size of the platinum particles in the high durability enhancer was more than 50 nm, there were problems in that compared to the same Pt content, the Pt specific surface area became smaller, and since the Pt particle and the carrier particle sizes were similar, Pt aggregated with each other rather than being located on the carrier, resulting in a decrease in durability efficiency and lower electrochemical performance of the cell during long-term operation.

Additionally, in the case of Comparative Example 7-4 in which the average particle size of the carrier in the high durability enhancer was more than 2,000 nm, there were problems in that since the carrier particle size was large, the nano-sized Pt particles were not evenly dispersed due to the low specific surface area, which reduced the efficiency of Pt reaction characteristics and reduced durability and electrochemical performance due to problems such as Pt aggregation.

Additionally, in the case of Comparative Examples 7-5 in which the content of the high durability enhancer in the electrolyte forming solution was more than 20.0 wt.%, there was no benefit due to the excessive use of the high durability enhancer.

**Examples 10-3 to 10-4 and Comparative Examples 8-1 to 8-2**

By using the same carrier as in Example 10-1, but changing the Pt particle content as shown in Table 5 below, to prepare a high durability enhancer (Pt/IrO$_2$), and then using the same, an electrolyte membrane-forming solution was prepared by mixing 0.5 wt.% of the high durability enhancer (Pt/IrO$_2$) and the remaining amount of the ionomer.

**Experimental Example 3: Evaluation of durability of electrolyte membrane and analysis experiment of fluorine ion release rate**

By using the electrolyte membrane-forming solutions prepared in Examples 10-3 to 10-4 and Comparative Examples 8-1 to 8-2, electrolyte membranes having a single-layer structure with a thickness of 10 $\mu$m was prepared in the same manner as in Experimental Example 1, and then, FER and OCV were measured, and the results are shown in Table 5 below.

[Table 5]

| Classification | Content of Pt (wt.%) | Type of Carrier | FER (umol/g·h) | OCV Final Lifespan Time (hr) | Volate (V) @1A/cm$^2$ |
|---|---|---|---|---|---|
| Example 10-1 | 1.0 | IrO$_2$ | 1.15 | 1250 | 0.68 |
| Example 10-2 | 0.1 | IrO$_2$ | 2.81 | 851 | 0.70 |
| Example 10-3 | 0.01 | IrO$_2$ | 9.10 | 512 | 0.71 |
| Example 10-4 | 4.5 | IrO$_2$ | 0.88 | 1271 | 0.63 |
| Comparative Example 8-1 | 0 | IrO$_2$ | 10.27 | 353 | 0.72 |
| Comparative Example 8-2 | 5.5 | IrO$_2$ | 0.97 | 1288 | 0.59 |

Through Table 5, it was confirmed that the appropriate content of Pt nanoparticles in the composite when IrO$_2$ was applied as the carrier was 0.01 to 4.5 wt.%.

**Examples 11-3 to 11-4 and Comparative Examples 9-1 to 9-2**

By using the same carrier as in Example 11-1, but changing the content of Pt particles as shown in Table 6 below, after preparing a high durability enhancer (Pt/SnO$_2$) and using the same, electrolyte membrane-forming solutions were prepared by mixing 0.5 wt.% by weight of the high durability enhancer (Pt/SnO$_2$) and the remaining amount of the ionomer.

**Experimental Example 4: Evaluation of durability of electrolyte membrane and analysis experiment of fluorine ion release rate**

By using the electrolyte membrane-forming solutions prepared in Examples 11-3 to 11-4 and Comparative Examples 9-1 to 9-2, electrolyte membranes having a single-layer structure with a thickness of 10 $\mu$m were respectively prepared in the same manner as in Experimental Example 1, and then, FER and OCV were measured, and the results are shown in Table 6 below.

[Table 6]

| Classification | Content of Pt (wt.%) | Type of Carrier | FER (umol/g·h) | OCV Final Lifespan Time (hr) | Volate(V) @1A/cm$^2$ |
|---|---|---|---|---|---|
| Example 11-1 | 1.0 | SnO$_2$ | 0.85 | 1286 | 0.69 |
| Example 11-2 | 0.1 | SnO$_2$ | 2.51 | 908 | 0.71 |
| Example 11-3 | 0.01 | SnO$_2$ | 8.87 | 459 | 0.73 |
| Example 11-4 | 3.0 | SnO$_2$ | 0.79 | 1300 | 0.65 |
| Comparative Example 9-1 | 0 | SnO$_2$ | 9.54 | 411 | 0.73 |
| Comparative Example 9-2 | 4.0 | SnO$_2$ | 0.94 | 1185 | 0.61 |

Through Table 6, when SnO$_2$ was applied as the carrier, it was confirmed that the appropriate content of Pt nanoparticles in the composite was 0.01 to 3.0 wt.%.

**Examples 12-3 to 12-4 and Comparative Examples 10-1 to 10-2**

By using the same carrier as in Example 12-1, but changing the content of Pt particles as shown in Table 7 below, after preparing a high durability enhancer (Pt/IrO$_2$) and using the same, electrolyte membrane forming solutions were prepared by mixing 0.5 wt.% of the high durability enhancer (Pt/Ti$_4$O$_7$) and the remaining amount of the ionomer.

**Experimental Example 5: Evaluation of durability of electrolyte membrane and analysis experiment of fluorine ion release rate**

By using the electrolyte membrane-forming solutions prepared in Examples 12-3 to 12-4 and Comparative Examples 10-1 to 10-2, electrolyte membranes having a single-layer structure with a thickness of 10 $\mu$m were respectively prepared in the same manner as in Experimental Example 1, and then, FER and OCV were measured, and the results are shown in Table 7 below.

[Table 7]

| Classification | Content of Pt (wt.%) | Type of Carrier | FER (umol/g·h) | OCV Final Lifespan Time (hr) | Volate(V) @1A/cm$^2$ |
|---|---|---|---|---|---|
| Example 12-1 | 1.0 | Ti$_4$O$_7$ | 0.79 | 1288 | 0.70 |
| Example 12-2 | 0.1 | Ti$_4$O$_7$ | 2.55 | 921 | 0.73 |
| Example 12-3 | 0.01 | Ti$_4$O$_7$ | 8.50 | 561 | 0.74 |
| Example 12-4 | 5.5 | Ti$_4$O$_7$ | 0.69 | 1319 | 0.66 |
| Comparative Example 10-1 | 0 | Ti$_4$O$_7$ | 9.08 | 493 | 0.74 |
| Comparative Example 10-2 | 6.5 | Ti$_4$O$_7$ | 0.69 | 1320 | 0.61 |

Through the OCV final lifespan and Voltage performance values in Table 7, it was confirmed that the appropriate content of Pt nanoparticles in the composite was 0.01 to 5.50 wt.%, when Ti$_4$O$_7$ was applied as the carrier.

**Example 14**

An electrolyte membrane-forming solution was prepared by mixing 0.5 wt.% of the high durability enhancer in which the composite prepared in Example 9-1 and the composite prepared in Example 10-1 were mixed at a weight ratio of 1 :0.3, and the remaining amount of the ionomer.

**Example 15**

**(1) Preparation of Pt/GDC composite**

GDC represented by Chemical Formula 1-1 below was prepared as a carrier by a method of obtaining a coprecipitate by dropping a mixed solution of a cerium precursor (cerium nitrate) and a gadolinium precursor (gadolinium nitrate) into an aqueous solution under certain environmental conditions. In this case, the particle size ($D_{50}$) of the carrier was 180 nm.

$$[\text{Chemical Formula 1-1}] \qquad Gd_xCe_{1-x}O_{2-y}$$

In Chemical Formula 1-1, x is 0.1, y is an oxygen vacancy value that makes the compound electrically neutral, and is a fixed number satisfying $0 < y \leq 0.25$.

Next, platinum in a precursor state was prepared, the carrier was mixed therein, and a reducing agent was used to perform a process of inducing a reduction reaction from platinum in a precursor state to platinum metal in a nanoparticle state, and thus, platinum nanoparticles were deposited on the surface of the carrier to prepare an integrated Pt/GDC composite.

The content of platinum nanoparticles in the prepared Pt/GDC composite was 0.1 wt.%, and the average particle size ($D_{50}$) of the platinum powder was about 5 nm.

**(2) Preparation of electrolyte membrane-forming solution**

An electrolyte membrane-forming solution was prepared by mixing 0.5 wt.% of the high durability enhancer in which the composite and the Pt/GDC composite prepared in Example 9-1 were mixed at a weight ratio of 1:0.3, and the remaining amount of the ionomer.

**Experimental Example 6: Evaluation of durability of electrolyte membrane and analysis experiment of fluorine ion release rate**

By using the electrolyte membrane-forming solutions prepared in Examples 14 to 15, an electrolyte membrane having a single layer structure with a thickness of 10 $\mu$m was prepared in the same manner as in Experimental Example 1, and then, FER and OCV were measured, and the results are shown in Table 8 below.

[Table 8]

| Classification | Content of Pt (wt.%) | Type of Carrier | FER (umol/g·h) | OCV Final Lifespan Time (hr) |
|---|---|---|---|---|
| Example 14 | Pt/CeO$_2$ composite : Pt/IrO$_2$ composite =1:0.3 weight ratio | | 0.66 | 1522 |
| Example 15 | Pt/CeO$_2$ composite : Pt/GDC composite =1:0.3 weight ratio | | 0.55 | 1443 |
| Example 9-2 | 1.0 | CeO$_2$ | 0.64 | 1305 |
| Example 10-1 | 1.0 | IrO$_2$ | 1.15 | 1250 |

Looking at Table 8, it was confirmed that as a high durability enhancer, Examples 14 and 15 using a mixture of two types of composites had more excellent durability enhancement effects than using only one type.

**Preparation Example 1-1: Preparation of PTFE porous support**

A paste was prepared by uniformly dispersing 23 parts by weight of naphtha, which is a liquid lubricant, by mixing and stirring with 100 parts by weight of PTFE fine powder having an average particle diameter of 570 $\mu$m.

Next, the paste was left at 50°C for 18 hours to mature, and then compressed by using a molding jig to prepare a PTFE block.

Next, after introducing the PTFE block into an extrusion mold, pressure extrusion was performed under a pressure of about 0.10 Ton/cm$^2$.

Next, it was rolled by using a pressure roll to prepare an unfired tape having an average thickness of 850 $\mu$m.

Next, the unfired tape was dried by applying heat of 180°C while being transferred to a conveyor belt at a speed of 3 M/min to remove the lubricant.

Next, the unfired tape from which the lubricant had been removed was uniaxially stretched (longitudinal stretching) by 6.5 times under the conditions of a stretching temperature of 280°C and a stretching rate of 10 M/min.

Next, the uniaxially stretched unfired tape was biaxially stretched by 30 times (width direction stretching) under the conditions of a stretching temperature of 250°C and a stretching rate of 10 M/min to prepare a porous support.

Next, the uniaxially and biaxially stretched porous support was calcined on a conveyor belt at a rate of 15 M/min at 420°C to prepare a PTFE porous support having an average thickness of 16 $\mu$m and an average pore size of 0.114 $\mu$m.

**Preparation Example 1-2: Preparation of PTFE porous support**

A porous PTFE support was prepared in the same manner as in Preparation Example 1-1. However, unlike the support of Preparation Example 1-1, uniaxial and biaxial stretching conditions were changed to prepare a PTFE porous support having an average thickness of 5 $\mu$m and an average pore size of 0.114 $\mu$m.

**Preparation Example 1-3: Preparation of PTFE porous support**

A porous PTFE support was prepared in the same manner as in Preparation Example 1-1. However, unlike the support of Preparation Example 1-1, uniaxial and biaxial stretching conditions were changed to prepare a porous PTFE support having an average thickness of 12 $\mu$m and an average pore size of 0.114 $\mu$m.

**Preparation Example 1-4: Preparation of PTFE porous support**

A porous PTFE support was prepared in the same manner as in Preparation

Example 1-1. However, unlike the support of Preparation Example 1-1, the uniaxial and biaxial stretching conditions were changed to prepare a porous PTFE support having an average thickness of 3 $\mu$m and an average pore size of 0.114 $\mu$m.

**Preparation Example 2-1: Preparation of PEMFC composite electrolyte membrane**

(1) Preparation of solution for forming electrolyte membrane

0.5 wt.% of the durability enhancer (Pt/GDC) prepared in Example 1 and 95.5 wt.% of a perfluorinated sulfonated ionomer (Solvay, Aquivion D72-25DS) having an equivalent weight of -SO$_3$H group of 720 were mixed to prepare a solution for forming an electrolyte membrane.

(2) The porous PTFE supports prepared in Preparation Example 1-2 were prepared as a first support layer and a second support layer, respectively.

(3) After fixing the first support layer to a glass substrate, using a film applicator and impregnating one surface of the first support layer with the solution for forming an electrolyte membrane, drying was performed in a vacuum oven at 80°C for 20 minutes, and thus, a first electrolyte layer having an average thickness of 4 $\mu$m was formed on one surface of the first support layer.

(4) After fixing the second support layer to a glass substrate, using a film applicator and impregnating one surface of the second support layer with the solution for forming the electrolyte membrane, drying was performed in a vacuum oven at 80°C for 20 minutes, and thus, a third electrolyte layer having an average thickness of 4 $\mu$m was formed on one surface of the second support layer.

(5) After impregnating the other surface of the first support layer having the first electrolyte layer formed on one surface with the solution for forming an electrolyte membrane, drying was performed in a vacuum oven at 80°C for 20 minutes, and thus, a second electrolyte layer having an average thickness of 3 $\mu$m was formed on the other surface of the first support layer.

(6) The second support layer having the third electrolyte layer formed on one surface was stacked on the other surface of the prepared second electrolyte layer, and heat treatment was performed at 160°C for 10 minutes such that a PEMFC composite electrolyte membrane with an average thickness of 15 $\mu$m, in which the first electrolyte layer, the first support layer (= thinned to an average thickness of 2 $\mu$m due to shrinkage during preparation), the second electrolyte layer, the second support layer (= thinned to an average thickness of 2 $\mu$m due to shrinkage during preparation) and the third electrolyte layer were sequentially stacked, was prepared as shown in FIG. 1.

**Preparation Example 2-2: Preparation of PEMFC composite electrolyte membrane**

(1) The porous PTFE supports prepared as supports in Preparation Example 1-1 were prepared as a first support layer and a second support layer, respectively.

(2) to (4) By using the PTFE porous support of Preparation Example 1-1 and the solution for forming an electrolyte membrane prepared in Preparation Example 2-1, a laminate in which in which a first electrolyte layer - a first support layer - a second electrolyte layer - a second support layer - a third electrolyte layer were stacked was prepared, and a first electrolyte layer (average thickness 2.0 μm), a second electrolyte layer (average thickness 1.0 μm) and a third electrolyte layer (average thickness 2.0 μm) were formed.

(5) Next, the laminate was heat-treated at 160°C for 10 minutes to prepare a PEMFC composite electrolyte membrane with an average thickness of 15 μm, in which a first electrolyte layer, a first support layer (= thinned to an average thickness of 5 μm due to shrinkage during preparation), a second electrolyte layer, a second support layer (= thinned to an average thickness of 5 μm due to shrinkage during preparation) and a third electrolyte layer were sequentially stacked, as shown in FIG. 1.

**Preparation Example 2-3: Preparation of PEMFC composite electrolyte**

**membrane**

(1) to (4) By using the same PTFE porous support as in Preparation Example 2-2 and the solution for forming an electrolyte membrane prepared in Preparation Example 2-1, a laminate in which a first electrolyte layer - a first support layer - a second electrolyte layer - a second support layer - a third electrolyte layer were stacked was prepared, and the first electrolyte layer, the second electrolyte layer and the third electrolyte layer were each formed to have an average thickness of 1 μm.

(5) Next, the laminate was heat-treated at 160°C for 10 minutes to prepare a PEMFC composite electrolyte membrane with an average thickness of 13 μm, in which a first electrolyte layer, a first support layer (= thinned to an average thickness of 5 μm due to shrinkage during preparation), a second electrolyte layer, a second support layer (= thinned to an average thickness of 5 μm due to shrinkage during preparation) and a third electrolyte layer were sequentially stacked, as shown in FIG. 1.

**Preparation Example 2-4: Preparation of PEMFC composite electrolyte**

**membrane**

(1) The porous PTFE supports prepared in Preparation Example 1-3 were prepared as a first support layer and a second support layer, respectively.

(2) to (4) By using the PTFE porous support of Preparation Example 1-3 and the solution for forming an electrolyte membrane prepared in Preparation Example 2-1, a laminate in which a first electrolyte layer - a first support layer - a second electrolyte layer - a second support layer - a third electrolyte layer were stacked was prepared, and the first electrolyte layer (average thickness of 2.5 μm), the second electrolyte layer (average thickness of 2.0 μm) and the third electrolyte layer (average thickness of 2.5 μm) were formed.

(5) Next, the laminate was heat-treated at 160°C for 10 minutes to prepare a PEMFC composite electrolyte membrane with an average thickness of 15 μm, in which a first electrolyte layer, a first support layer (= thinned to an average thickness of 4 μm due to shrinkage during preparation), a second electrolyte layer, a second support layer (= thinned to an average thickness of 4 μm due to shrinkage during preparation) and a third electrolyte layer were sequentially stacked, as shown in FIG. 1.

**Preparation Example 2-5: Preparation of PEMFC composite electrolyte membrane**

(1) The porous PTFE supports prepared in Preparation Example 1-4 were prepared as a first support layer and a second support layer, respectively.

(2) to (4) By using the PTFE porous support of Preparation Example 1-4 and the solution for forming an electrolyte membrane prepared in Preparation Example 2-1, a laminate in which a first electrolyte layer - a first support layer - a second electrolyte layer - a second support layer - a third electrolyte layer were stacked was prepared, and the first electrolyte layer (average thickness of 5.0 $\mu$m), the second electrolyte layer (average thickness of 3.0 $\mu$m) and the third electrolyte layer (average thickness of 5.0 $\mu$m) were formed.

(5) Next, the laminate was heat-treated at 160°C for 10 minutes to prepare a PEMFC composite electrolyte membrane with an average thickness of 15 $\mu$m, in which a first electrolyte layer, a first support layer (= thinned to an average thickness of 1 $\mu$m due to shrinkage during preparation), a second electrolyte layer, a second support layer (= thinned to an average thickness of 1 $\mu$m due to shrinkage during preparation) and a third electrolyte layer were sequentially stacked, as shown in FIG. 1.

**Comparative Preparation Example 2-1: Preparation of PEMFC composite electrolyte membrane**

(1) Preparation of solution for forming electrolyte membrane

A solution for forming an electrolyte membrane without using a durability enhancer was prepared by mixing 95.5 wt.% of a perfluorine-based sulfonated ionomer (Solvay, Aquivion D72-25DS) having an equivalent weight of -$SO_3H$ of 720.

(2) to (4) By using the PTFE porous support of Preparation Example 1-1 and the solution for forming an electrolyte membrane prepared in Preparation Example 2-1, a laminate in which a first electrolyte layer - a first support layer - a second electrolyte layer - a second support layer - a third electrolyte layer were stacked was prepared, and the first electrolyte layer (average thickness of 4.0 $\mu$m), the second electrolyte layer (average thickness of 3.0 $\mu$m) and the third electrolyte layer (average thickness of 4.0 $\mu$m) were formed.

(5) Next, the laminate was heat-treated at 160°C for 10 minutes to prepare a PEMFC composite electrolyte membrane with an average thickness of 15 $\mu$m, in which a first electrolyte layer, a first support layer (= thinned to an average thickness of 5 $\mu$m due to shrinkage during preparation), a second electrolyte layer, a second support layer (= thinned to an average thickness of 5 $\mu$m due to shrinkage during preparation) and a third electrolyte layer were sequentially stacked, as shown in FIG. 1.

**Experimental Example 7: Measurement of physical properties of PEMFC composite electrolyte membrane**

(1) Durability measurement experiment (Fenton test)

Each of the PEMFC composite electrolyte membranes prepared in Preparation Examples 2-1 to 2-5 and Comparative Preparation Example 2-1 was prepared as a test piece with a size of 5 cm $\times$ 5 cm (width $\times$ length), and after drying in an oven at 80°C for 5 hours, the mass was measured. The prepared test piece was immersed in 200 g of a solution prepared by adding 3 ppm of $Fe^{2+}$ to hydrogen peroxide at a concentration of 2% by volume, and then left at 80°C for 120 hours.

The fluorine ion concentration eluted from the test piece was measured by using a fluorine ion selective electrode, and the results are shown in Table 3 below. In the Fenton test, as the measured value was low, the fluorine ion elution was low, that is, the durability of the electrolyte membrane was excellent.

**(2) Dimensional stability measurement experiment**

Each of the PEMFC composite electrolyte membranes prepared in Preparation Examples 2-1 to 2-5 and Comparative Preparation Example 2-1 was cut into 5 cm $\times$ 1 cm (MD direction $\times$ TD direction), and each of the cut PEMFC composite electrolyte membranes was measured for the dimensional change rates in the MD direction (= length direction) and the TD direction (= width direction), respectively, by Relationship Formula 1 below, and the results are shown in Table 3 below.

$$[\text{Relationship Formula 1}]$$

$$\text{Dimensional change rate (\%)} = (B\text{-}A)/A \times 100$$

In Relationship Formula 1 above, A represents the initial length of the PEMFC composite electrolyte membrane, and B represents the length measured after leaving the PEMFC composite electrolyte membrane at a temperature of 80°C for 20 minutes.

In the dimensional change rate experiment, as the measured value was low, the dimensional stability was higher, that is, the mechanical properties of the electrolyte membrane were excellent.

**(3) Performance measurement experiment**

Each of the PEMFC composite electrolyte membranes prepared in Preparation Examples 2-1 to 2-5 and Comparative Preparation Example 2-1 was cut into 8 cm × 8 cm (MD direction × TD direction), and PEMFC membrane-electrode assemblies including each of the cut PEMFC composite electrolyte membranes were manufactured as shown in FIG. 2. Thereafter, the performance was calculated by measuring the voltage (V) measured at a current of 1A under the conditions of a temperature of 65°C and an RH of 100%, and the results are shown in Table 3 below.

**(4) Tensile strength measurement experiment**

The tensile strength of each of the PEMFC composite electrolyte membranes prepared in Preparation Examples 2-1 to 2-5 and Comparative Preparation Example 2-1 was measured according to ASTM D882, and the results are shown in Table 9 below.

[Table 9]

| Classification | | Preparation Example 2-1 | Preparation Example 2-2 | Preparation Example 2-3 | Preparation Example 2-4 | Preparation Example 2-5 | Comparative Preparation Example 2-1 |
|---|---|---|---|---|---|---|---|
| First Electrolyte Layer | Thickness (μm) | 4 | 2 | 1 | 2.5 | 5 | 4 |
| First Support Layer | Thickness (μm) | 2 | 5 | 5 | 4 | 1 | 2 |
| Second Electrolyte Layer | Thickness (μm) | 3 | 1 | 1 | 2 | 3 | 3 |
| Second Support Layer | Thickness (μm) | 2 | 5 | 5 | 4 | 1 | 2 |
| Third Electrolyte Layer | Thickness (μm) | 4 | 2 | 1 | 2.5 | 5 | 4 |
| Composite Electrolyte Membrane | Total Thickness (μm) | 15 | 15 | 13 | 15 | 15 | 15 |
| Performance (V/1A@65°C) | | 0.71 | 0.62 | 0.61 | 0.63 | 0.72 | 0.68 |
| Durability (umol/g·h) | | 1.7 | 1.8 | 1.8 | 1.8 | 1.7 | 14.1 |
| Dimensional Change Rate (%) | MD Direction | 1 | 1 | 1 | 1 | 3 | 1 |
| | TD Direction | 5 | 5 | 5 | 5 | 8 | 5 |
| Tensile Strength (Mpa) | MD Direction | 64 | 68 | 69 | 65 | 49 | 63 |
| | TD Direction | 61 | 64 | 62 | 59 | 43 | 61 |

As can be seen in Table 9, it was confirmed that the PEMFC composite electrolyte membranes prepared in Preparation Examples 2-1 to 2-5 had excellent durability and dimensional stability, as well as high tensile strength and excellent performance. In addition, when compared with Comparative Preparation Example 2-1, Preparation Examples 2-1 to 2-5 including the durability enhancer in the electrolyte layer were confirmed to have relatively specialized characteristics in durability.

**Preparation Example 3-1: Preparation of PEMFC composite electrolyte membrane**

A laminate having the same thickness of each layer as in Preparation Example 1 above, in which a first electrolyte layer (4 $\mu$m) - a first support layer (2 $\mu$m) - a second electrolyte layer (3 $\mu$m) - a second support layer (2 $\mu$m) - a third electrolyte layer (4 $\mu$m) were stacked, was prepared, and for the first and second support layers, the PTFE porous support prepared in Preparation Example 1-2 was used.

As shown in Table 10 below, after preparing solutions for forming an electrolyte membrane having different contents of the durability enhancer of Example 1, the first to third electrolyte layers were formed by using the solutions, respectively, to prepare a composite electrolyte membrane.

**Preparation Example 3-2 and Comparative Preparation Examples 3-1 to 3-2**

By forming an electrolyte layer having the same thickness and using the same support as in Preparation Example 3-1, a laminate in which a first electrolyte layer (4 $\mu$m) - a first support layer (2 $\mu$m) - a second electrolyte layer (3 $\mu$m) - a second support layer (2 $\mu$m) - a third electrolyte layer (4 $\mu$m) were stacked was prepared, and after preparing by changing the content of the durability enhancer in the solution for forming an electrolyte membrane, Preparation Example 3-2 and Comparative Preparation Examples 3-1 to 3-2 were performed by respectively preparing composite electrolyte membranes by respectively changing the content of the durability enhancer in the electrolyte layer as shown in Table 4 below.

**Experimental Example 8: Measurement of physical properties of PEMFC composite electrolyte membranes**

As shown schematically in FIG. 5, a PEMFC membrane-electrode assembly, which was provided with an anode electrode 1, an anode catalyst layer 2, an anode gas diffusion layer 3, a composite electrolyte membrane 100, a cathode gas diffusion layer 4, a cathode catalyst layer 5 and a cathode electrode substrate 6, was manufactured.

In this case, the composite electrolyte 100 used each of the composite electrolyte membranes of Preparation Example 2-1, Preparation Examples 3-1 to 3-2 and Comparative Preparation Examples 3-1 to 3-2 above, and each first electrolyte layer was provided in the anode direction, and the third electrolyte layer was provided in the cathode direction.

In addition, the performance and durability measurement results according to the added content of the durability enhancer and application design in the manufactured membrane-electrode assembly are shown in Table 10 below.

[Table 10]

| Classification | Preparation Example 2-1 | Preparation Example 3-1 | Preparation Example 3-2 | Comparative Preparation Example 3-1 | Comparative Preparation Example 3-2 |
|---|---|---|---|---|---|
| Content of Durability Enhancer in First Electrolyte Layer (wt.%) | 0.5 | 0.5 | 1.5 | 1.5 | 2.5 |
| Content of Durability Enhancer in Second Electrolyte Layer (wt.%) | 0.5 | 1.0 | 0.5 | 1.0 | 1.5 |
| Content of Durability Enhancer in Third Electrolyte Layer (wt.%) | 0.5 | 1.5 | 1.5 | 0.5 | 0.5 |
| Performance (V/1A@65°C) | 0.71 | 0.71 | 0.68 | 0.67 | 0.63 |
| Durability (umol/g·h) | 1.70 | 1.25 | 1.41 | 1.60 | 1.66 |

Looking at the physical property measurement results in Table 10, Preparation Example 2-1, Preparation Example 3-1 and Preparation Example 3-2 all showed excellent durability measurement results overall. When Preparation Examples 3-1 to 3-2 and Comparative Preparation Examples 3-1 to 3-2 are compared, as the content of the durability enhancer increased in the cathode direction rather than the anode direction within each layer of the first to third electrolyte layers constituting the composite electrolyte (first electrolyte layer < second electrolyte layer < third electrolyte layer) or when the content of the durability enhancer was higher in the first and third electrolyte layers than in the second electrolyte layer (second electrolyte layer < first electrolyte layer, third electrolyte layer), the durability enhancement effects showed relatively more excellent results and also showed favorable results in terms of performance.

**Preparation Example 4: Preparation of PEMFC composite electrolyte membrane**

(1) Preparation of solution for forming electrolyte membrane

0.5 wt.% of the durability enhancer (Pt/CeO$_2$) prepared in Example 9-2 and 95.5 wt.% of a perfluorinated sulfonated ionomer (Solvay, Aquivion D72-25DS) having an equivalent weight of -SO$_3$H group of 720 were mixed to prepare a solution for forming an electrolyte membrane.

(2) The porous PTFE supports prepared in Preparation Example 1-2 were prepared as a first support layer and a second support layer, respectively.

(3) After fixing the first support layer to a glass substrate, using a film applicator and impregnating one surface of the first support layer with the solution for forming an electrolyte membrane, drying was performed in a vacuum oven at 80°C for 20 minutes, and thus, a first electrolyte layer having an average thickness of 4 $\mu$m was formed on one surface of the first support layer.

(4) After fixing the second support layer to a glass substrate, using a film applicator and impregnating one surface of the second support layer with the solution for forming the electrolyte membrane, drying was performed in a vacuum oven at 80°C for 20 minutes, and thus, a third electrolyte layer having an average thickness of 4 $\mu$m was formed on one surface of the second support layer.

(5) After impregnating the other surface of the first support layer having the first electrolyte layer formed on one surface with the solution for forming an electrolyte membrane, drying was performed in a vacuum oven at 80°C for 20 minutes, and thus, a second electrolyte layer having an average thickness of 3 $\mu$m was formed on the other surface of the first support layer.

(6) The second support layer having the third electrolyte layer formed on one surface was stacked on the other surface of the prepared second electrolyte layer, and heat treatment was performed at 160°C for 10 minutes such that a PEMFC composite electrolyte membrane with an average thickness of 15 $\mu$m, in which the first electrolyte layer, the first support layer (= thinned to an average thickness of 2 $\mu$m due to shrinkage during preparation), the second electrolyte layer, the second support layer (= thinned to an average thickness of 2 $\mu$m due to shrinkage during preparation) and the third electrolyte layer were sequentially stacked, was prepared as shown in FIG. 1.

**Preparation Example 5-1: Preparation of PEMFC composite electrolyte membrane**

A laminate having the same thickness of each layer as in Preparation Example 4 above, in which a first electrolyte layer (4 $\mu$m) - a first support layer (2 $\mu$m) - a second electrolyte layer (3 $\mu$m) - a second support layer (2 $\mu$m) - a third electrolyte layer (4 $\mu$m) were stacked, was prepared, and for the first and second support layers, the PTFE porous support prepared in Preparation Example 1-2 was used.

As shown in Table 11 below, after preparing solutions for forming an electrolyte membrane having different contents of the durability enhancer of Example 9-1, the first to third electrolyte layers were formed by using the solutions, respectively, to prepare a composite electrolyte membrane.

**Preparation Example 5-2 and Comparative Preparation Examples 4-1 to 4-2**

By forming an electrolyte layer having the same thickness and using the same support as in Preparation Example 5-1, a laminate in which a first electrolyte layer (4 $\mu$m) - a first support layer (2 $\mu$m) - a second electrolyte layer (3 $\mu$m) - a second support layer (2 $\mu$m) - a third electrolyte layer (4 $\mu$m) were stacked was prepared, and after preparing by changing the content of the durability enhancer in the solution for forming an electrolyte membrane, Preparation Example 5-2 and Comparative Preparation Examples 4-1 to 4-2 were performed by respectively preparing composite electrolyte membranes by respectively changing the content of the durability enhancer in the electrolyte layer as shown in Table 11 below.

**Experimental Example 9: Measurement of Physical Properties of PEMFC composite electrolyte membrane**

As in Experimental Example 8, a PEMFC membrane-electrode assembly, which was provided with an anode electrode 1, an anode catalyst layer 2, an anode gas diffusion layer 3, a composite electrolyte membrane 100, a cathode gas diffusion layer 4, a cathode catalyst layer 5 and a cathode electrode substrate 6, was manufactured.

In this case, the composite electrolyte 100 used each of the composite electrolyte membranes of Preparation Example 4, Preparation Examples 5-1 to 5-2 and Comparative Preparation Examples 4-1 to 4-2 above, and each first electrolyte layer was provided in the anode direction, and the third electrolyte layer was provided in the cathode direction.

In addition, the performance and durability measurement results according to the added content of the durability enhancer and application design in the manufactured membrane-electrode assembly are shown in Table 11 below.

[Table 11]

| Classification | Preparation Example 4 | Preparation Example 5-1 | Preparation Example 5-2 | Comparative Preparation Example 4-1 | Comparative Preparation Example 4-2 |
|---|---|---|---|---|---|
| Content of Durability Enhancer in First Electrolyte Layer (wt.%) | 1.0 | 0.5 | 1.5 | 1.5 | 2.5 |
| Content of Durability Enhancer in Second Electrolyte Layer (wt.%) | 0.5 | 1.0 | 0.5 | 1.0 | 1.5 |
| Content of Durability Enhancer in Third Electrolyte Layer (wt.%) | 2.0 | 1.5 | 1.5 | 0.5 | 0.5 |
| Performance (V/1A@65°C) | 0.70 | 0.70 | 0.66 | 0.67 | 0.64 |
| Durability (umol/g·h) | 1.69 | 1.28 | 1.44 | 1.20 | 1.60 |

Looking at the physical property measurement results in Table 11, Preparation Example 4, Preparation Example 5-1 and Preparation Example 5-2 all showed excellent durability measurement results overall. When Preparation Examples 5-1 to 5-2 and Comparative Preparation Examples 4-1 to 4-2 are compared, as the content of the durability enhancer increased in the cathode direction rather than the anode direction within each layer of the first to third electrolyte layers constituting the composite electrolyte (first electrolyte layer < second electrolyte layer < third electrolyte layer) or when the content of the durability enhancer was higher in the first and third electrolyte layers than in the second electrolyte layer (second electrolyte layer < first electrolyte layer, third electrolyte layer), the durability enhancement effects showed relatively more excellent results and also showed favorable results in terms of performance.

Although one exemplary embodiment of the present invention has been described above, the spirit of the present invention is not limited to the exemplary embodiments presented in the present specification, and those skilled in the art who understand the spirit of the present invention may easily suggest other exemplary embodiments by changing, modifying, deleting or adding components within the scope of the same spirit, but this will also fall within the scope of the present invention.

[Explanation of Reference Numerals]

| | | | |
|---|---|---|---|
| 1: | Anode electrode substrate | 2: | Anode catalyst layer |
| 3: | Anode gas diffusion layer | 4: | Cathode gas diffusion layer |
| 5: | Cathode catalyst layer | 6: | Cathode electrode substrate |
| 11: | First support layer | 12: | Second support layer |
| 13: | Third support layer | 14: | Fourth support layer |
| 21: | First electrolyte layer | 22: | Second electrolyte layer |
| 23: | Third electrolyte layer | 24: | Fourth electrolyte layer |
| 25: | Fifth electrolyte layer | | |
| 100: | PEMFC composite electrolyte membrane | | |
| 200: | Anode | 300: | Cathode |

**Claims**

1. A PEMFC electrolyte membrane durability enhancer, comprising:

   platinum (Pt) and a carrier supporting the platinum,
   wherein the platinum is a nano-sized platinum powder, and the platinum powder is integrated by combining on a surface of the carrier, and
   wherein the carrier comprises at least one selected from $CeO_2$, GDC (Gd-doped Ceria), $IrO_2$, $SnO_2$ and $Ti_4O_7$.

2. The PEMFC electrolyte membrane durability enhancer of claim 1, wherein the GDC is a compound represented by Chemical Formula 1 below, in which gadolinium (Gd) is doped into a ceria lattice:

   [Chemical Formula 1] $Gd_xCe_{1-x}O_{2-y}$

   wherein in Chemical Formula 1, x is a fixed number that satisfies $0<x\leq0.3$, and y is an oxygen vacancy value that makes a compound electrically neutral, and is a fixed number that satisfies $0<y\leq0.25$.

3. The PEMFC electrolyte membrane durability enhancer of claim 1, wherein the particle size ($D_{50}$) of the platinum powder is 0.1 to 50 nm, and
   wherein the particle size ($D_{50}$) of the carrier is 10 to 2,000 nm.

4. The PEMFC electrolyte membrane durability enhancer of claim 1, wherein the PEMFC electrolyte membrane durability enhancer has a BET specific surface area of 10 to 500 $m^2$/g.

5. The PEMFC electrolyte membrane durability enhancer of claim 1, wherein the PEMFC electrolyte membrane durability enhancer comprises 0.01 to 6.00 wt.% of platinum and the remaining amount of a carrier supporting the platinum based on the total wt.%.

6. The PEMFC electrolyte membrane durability enhancer of claim 1, wherein when the carrier is $CeO_2$, the PEMFC electrolyte membrane durability enhancer comprises 0.01 to 6.00 wt.% of platinum particles based on the total weight of the PEMFC electrolyte membrane durability enhancer,

   wherein when the carrier is $IrO_2$, the PEMFC electrolyte membrane durability enhancer comprises 0.01 to 4.50 wt.% of platinum particles based on the total weight of the PEMFC electrolyte membrane durability enhancer,
   wherein when the carrier is $SnO_2$, the PEMFC electrolyte membrane durability enhancer comprises 0.01 to 3.00 wt.% of platinum particles based on the total weight of the PEMFC electrolyte membrane durability enhancer, and
   wherein when the carrier is $Ti_4O_7$, the PEMFC electrolyte membrane durability enhancer comprises 0.01 to 5.50 wt.% of platinum particles based on the total weight of the PEMFC electrolyte membrane durability enhancer.

7. The PEMFC electrolyte membrane durability enhancer of claim 1, further comprising:

   a cerium-based composite which comprises the platinum particles and $CeO_2$ supporting the platinum particles as a carrier; and
   a non-cerium-based composite which comprises the platinum particles as a carrier,
   wherein the carrier of the non-cerium-based composite comprises at least one selected from $IrO_2$, $SnO_2$ and $Ti_4O_7$.

8. The PEMFC electrolyte membrane durability enhancer of claim 7, wherein the cerium-based composite and the non-cerium-based composite are comprised at a weight ratio of 1 : 0.1 to 50.

9. The PEMFC electrolyte membrane durability enhancer of claim 1, further comprising:

   a cerium-based composite which comprises the platinum particles and $CeO_2$ supporting the platinum particles as a carrier; and
   a gadolinium-based composite which comprises platinum (Pt) particles and a GDC carrier supporting the platinum particles.

10. The PEMFC electrolyte membrane durability enhancer of claim 9, wherein the cerium-based composite and the gadolinium-based composite are comprised at a weight ratio of 1 : 0.05 to 10.

11. A PEMFC composite electrolyte membrane, comprising:
    the PEMFC electrolyte membrane durability enhancer according to any one of claims 1 to 10.

12. The PEMFC composite electrolyte membrane of claim 11, wherein the PEMFC composite electrolyte membrane is an electrolyte membrane in which a first electrolyte layer, a first support layer and a second electrolyte layer are sequentially stacked,

    wherein at least one layer selected from the first electrolyte layer and the second electrolyte layer comprises the PEMFC electrolyte membrane durability enhancer, a cerium (Ce)-based radical scavenger and an ionomer, and
    wherein the average thickness of the PEMFC composite electrolyte membrane is 5 to 30 μm.

13. The PEMFC composite electrolyte membrane of claim 12, wherein at least one layer selected from the first electrolyte layer and the second electrolyte layer further comprises a cerium (Ce)-based radical scavenger.

14. The PEMFC composite electrolyte membrane of claim 11, wherein the first electrolyte layer is an electrolyte layer in the direction of an anode electrode, and the second electrolyte layer is an electrolyte layer in the direction of a cathode electrode,

    wherein the first electrolyte layer and the second electrolyte layer comprise the PEMFC electrolyte membrane durability enhancer, and
    wherein the content of the PEMFC electrolyte membrane durability enhancer in the first electrolyte layer and the content of the PEMFC electrolyte membrane durability enhancer in the second electrolyte layer have a weight ratio of 1 : 0.05 to 1.0 .

15. The PEMFC composite electrolyte membrane of claim 11, wherein in the direction of an anode electrode to a cathode electrode, the PEMFC composite electrolyte membrane is a sequentially stacked composite electrolyte membrane in which a first electrolyte layer, a first support layer, a second electrolyte layer, a second support layer and a third electrolyte layer are sequentially stacked; or a sequentially stacked composite electrolyte membrane in which a first electrolyte layer, a first support layer, a second electrolyte layer, a second support layer, a third electrolyte layer, a third support layer and a fourth electrolyte layer are sequentially stacked, and
    wherein the first electrolyte layer, the second electrolyte layer, the third electrolyte layer and the fourth electrolyte layer each independently comprise the PEMFC electrolyte membrane durability enhancer, and the content of the PEMFC electrolyte membrane durability enhancer in the electrolyte layer has a gradient in which the content decreases based on the cathode electrode.

16. The PEMFC composite electrolyte membrane of claim 11, wherein in the direction of an anode electrode to a cathode electrode, the PEMFC composite electrolyte membrane is a sequentially stacked composite electrolyte membrane in which a first electrolyte layer, a second electrolyte layer and a third electrolyte layer are sequentially stacked; or a sequentially stacked composite electrolyte membrane in which a first electrolyte layer, a second electrolyte layer, a third electrolyte layer and a fourth electrolyte layer are sequentially stacked,

    wherein the PEMFC composite electrolyte membrane comprises a support layer between the first electrolyte layer and the second electrolyte layer, the second electrolyte layer and the third electrolyte layer, or the third electrolyte layer and the fourth electrolyte layer, and
    wherein the first electrolyte layer, the second electrolyte layer, the third electrolyte layer and the fourth electrolyte layer each independently comprise the PEMFC electrolyte membrane durability enhancer, and the content of the PEMFC electrolyte membrane durability enhancer in the electrolyte layer has a gradient in which the content decreases based on the cathode electrode.

17. The PEMFC composite electrolyte membrane of claim 11, wherein when applied to a PEMFC membrane-electrode assembly, the PEMFC composite electrolyte membrane is an electrolyte membrane in which a first electrolyte layer, a first support layer and a second electrolyte layer are sequentially stacked in the anode direction to the cathode direction, and

wherein the PEMFC composite electrolyte membrane satisfies Condition (2) below:

$$\text{Condition (2)} \quad A_1 \leq A_2$$

wherein in Condition (2) above, $A_1$ represents the content of the PEMFC electrolyte membrane durability enhancer in the first electrolyte layer, and $A_2$ represents the content of the PEMFC electrolyte membrane durability enhancer in the second electrolyte layer.

18. The PEMFC composite electrolyte membrane of claim 11, wherein when applied to a PEMFC membrane-electrode assembly, the PEMFC composite electrolyte membrane is a composite electrolyte membrane in which a first electrolyte layer, a first support layer, a second electrolyte layer, a second support layer and a third electrolyte layer are sequentially stacked in the anode direction to the cathode direction,

wherein at least one layer selected from the first electrolyte layer, the second electrolyte layer and the third electrolyte layer comprises the PEMFC electrolyte membrane durability enhancer, and
wherein the PEMFC composite electrolyte membrane satisfies all of Conditions (3) and (4) below:

$$(3) \quad B_1 \leq A_1, \ B_1 \leq A_2, \ B_1 \leq A_3$$

$$(4) \quad B_2 \leq A_1, \ B_2 \leq A_2, \ B_2 \leq A_3$$

wherein in Condition (3) above, $A_1$ represents the thickness of the first electrolyte layer, $A_2$ represents the thickness of the second electrolyte layer, $A_3$ represents the thickness of the third electrolyte layer, and $B_1$ represents the thickness of the first support layer, and in Condition (4) above, $A_1$ represents the thickness of the first electrolyte layer, $A_2$ represents the thickness of the second electrolyte layer, $A_3$ represents the thickness of the third electrolyte layer, and $B_2$ represents the thickness of the second support layer.

19. The PEMFC composite electrolyte membrane of claim 11, wherein when applied to a PEMFC membrane-electrode assembly, the PEMFC composite electrolyte membrane is a composite electrolyte membrane in which a first electrolyte layer, a first support layer, a second electrolyte layer, a second support layer and a third electrolyte layer are sequentially stacked in the anode direction to the cathode direction, and

wherein the PEMFC composite electrolyte membrane satisfies Condition (5) or (6) below:

$$\text{Condition (5)} \quad A_1 \leq A_2 \leq A_3$$

$$\text{Condition (6)} \quad A_2 \leq A_1, \ A_2 \leq A_3, \ A_1 \leq A_3$$

wherein in Conditions (5) and (6) above, $A_1$ represents the content of the PEMFC electrolyte membrane durability enhancer in the first electrolyte layer, $A_2$ represents the content of the PEMFC electrolyte membrane durability enhancer in the second electrolyte layer, and $A_3$ represents the content of the PEMFC electrolyte membrane durability enhancer in the third electrolyte layer.

20. A PEMFC membrane-electrode assembly, comprising:
an anode (oxidation electrode); the PEMFC composite electrolyte membrane of claim 11; and a cathode (reduction electrode).

FIG. 1a

FIG. 1b

**FIG. 2**

**FIG. 3**

**FIG. 4**

**FIG. 5**

**FIG. 6**

## INTERNATIONAL SEARCH REPORT

International application No.

**PCT/KR2022/013804**

**A.    CLASSIFICATION OF SUBJECT MATTER**

**H01M 8/1051**(2016.01)i; **H01M 8/1053**(2016.01)i; **H01M 8/1058**(2016.01)i; **H01M 8/1067**(2016.01)i; **H01M 8/1004**(2016.01)i; **H01M 8/10**(2006.01)i

According to International Patent Classification (IPC) or to both national classification and IPC

**B.    FIELDS SEARCHED**

Minimum documentation searched (classification system followed by classification symbols)

H01M 8/1051(2016.01); B29C 48/00(2019.01); H01M 4/86(2006.01); H01M 4/90(2006.01); H01M 8/02(2006.01); H01M 8/10(2006.01); H01M 8/1004(2016.01); H01M 8/1018(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PEMFC, 전해질막 (electrolysis membrane), 막-전극 접합체 (membrane-electrode assembly), 백금 (platinum), 내구성 (durability), 산화방지제 (antioxidant), 담지체 (carrier)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2019-0131690 A (SANG-A FRONTEC CO., LTD.) 27 November 2019 (2019-11-27)<br>See abstract; paragraphs [0016]-[0069], [0073]-[0095], [0097]-[0113], [0171]-[0182], [0248]-[0253] and [0265]-[0275]; and claims 1, 4-9 and 12. | 1-20 |
| Y | KR 10-2018-0060811 A (LG CHEM, LTD.) 07 June 2018 (2018-06-07)<br>See abstract; paragraphs [0006]-[0030] and [0090]-[0095]; and claim 3. | 1-20 |
| Y | KR 10-2014-0046213 A (LG CHEM, LTD.) 18 April 2014 (2014-04-18)<br>See abstract; and claims 14 and 15. | 15-16,18-19 |
| A | KR 10-2019-0131687 A (SANG-A FRONTEC CO., LTD.) 27 November 2019 (2019-11-27)<br>See entire document. | 1-20 |
| A | KR 10-2006-0104821 A (SAMSUNG SDI CO., LTD.) 09 October 2006 (2006-10-09)<br>See entire document. | 1-20 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 December 2022** | **30 December 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/013804**

| Patent document cited in search report | | Publication date (day/month/year) | Patent family member(s) | | | Publication date (day/month/year) |
|---|---|---|---|---|---|---|
| KR 10-2019-0131690 | A | 27 November 2019 | None | | | |
| KR 10-2018-0060811 | A | 07 June 2018 | KR | 10-2131483 | B1 | 07 July 2020 |
| KR 10-2014-0046213 | A | 18 April 2014 | None | | | |
| KR 10-2019-0131687 | A | 27 November 2019 | KR | 10-2118061 | B1 | 03 June 2020 |
| KR 10-2006-0104821 | A | 09 October 2006 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101860870

**Non-patent literature cited in the description**

- **S. SCHLICK et al.** *J. Phys. Chem. C,* 2016, vol. 120, 6885-6890

- **S. DESHPANDE et al.** *Appl. Phys.Lett.,* 2005, vol. 8, 133113